# EUROPEAN PATENT APPLICATION

(11) **EP 4 422 251 A1**
(43) Date of publication of application: **28.08.2024**
(21) Application number: 22889228.7
(22) Date of filing: 31.10.2022
(51) Int. Cl.: H04W 24/02

(54) **SENSING METHOD, APPARATUS AND SYSTEM**

(30) Priority: 05.11.2021 CN 202111309033
(71) Applicant: Huawei Technologies Co., Ltd., Shenzhen, Guangdong 518129 (CN)
(72) Inventor: HU, Mengshi, Shenzhen, Guangdong 518129 (CN); HAN, Xiao, Shenzhen, Guangdong 518129 (CN); DU, Rui, Shenzhen, Guangdong 518129 (CN); LV, Yi, Shenzhen, Guangdong 518129 (CN); YANG, Xun, Shenzhen, Guangdong 518129 (CN)
(74) Representative: Maiwald GmbH
(86) International application number: PCT/CN2022/128552
(87) International publication number: WO 2023/078203

(57) **Abstract**

This application provides a sensing method, an apparatus, and a system, to enable a plurality of measurement setups to share one measurement instance, to improve measurement efficiency. The method includes: A first device generates and sends first indication information, where the first indication information indicates that a first measurement setup and a second measurement setup share a first measurement instance. Correspondingly, a second device receives and parses the first indication information, to learn that the first measurement setup and the second measurement setup share the first measurement instance.

## Description

This application claims priority to Chinese Patent Application No. 202111309033.0, filed with the China National Intellectual Property Administration on November 5, 2021 and entitled "SENSING METHOD, APPARATUS, AND SYSTEM", which is incorporated herein by reference in its entirety.

### TECHNICAL FIELD

Embodiments of this application relate to the communication field, and in particular, to a sensing method, an apparatus, and a system.

### BACKGROUND

A sensing procedure is discussed in a wireless local area network (wireless local area network, WLAN) standard, for example, 802.11bf. A basically recognized sensing procedure includes the following main steps: sensing session setup (Sensing session setup), measurement setup (Measurement setup), and a measurement instance (Measurement instance).

Specifically, a sensing initiator initiates a sensing procedure, and a sensing responder joins the sensing procedure (sensing procedure) by performing a sensing session setup step, obtains a parameter, an attribute, and the like used in the sensing procedure by performing a measurement setup step, and performs sensing measurement and feedback in a measurement instance.

In the foregoing sensing procedure, the sensing initiator may obtain sensing-related information, for example, channel state information (channel state information, CSI) or a null data physical layer protocol data unit (physical protocol data unit, PPDU) (null data PPDU, NDP). Further, the sensing initiator may analyze the obtained sensing-related information to obtain a related status of the sensing responder. For example, the sensing initiator may sense whether an object enters a room, whether an object moves, or even distances, moving tracks, or the like of some objects.

### SUMMARY

This application provides a sensing method, an apparatus, and a system, to enable a plurality of measurement setups to share one measurement instance, to improve measurement efficiency.

According to a first aspect, a sensing method is provided. The method may be performed by a first device; or may be performed by a component of a first device, for example, a processor, a chip, or a chip system; or may be implemented by a logical module or software capable of implementing all or some of functions of a first device. The method includes: generating first indication information, and sending the first indication information. The first indication information indicates that a first measurement setup and a second measurement setup share a first measurement instance.

According to this solution, the first measurement setup and the second measurement setup share the first measurement instance. In this way, a measurement that originally needs to be completed by using a plurality of measurement instances can be centrally completed in one measurement instance, to reduce overheads and improve measurement efficiency.

In some possible designs, the first measurement setup is used to configure a first parameter for a first station, and the second measurement setup is used to configure a second parameter for a second station. According to this possible design, measurement related to the first station and the second station can be centrally performed in the first measurement instance, to improve measurement efficiency.

In some possible designs, the first indication information includes a first identifier and a second identifier. The first identifier is a part or all of bits of an identifier of the first measurement setup. The second identifier is a part or all of bits of an identifier of the second measurement setup. According to this possible design, the first measurement setup can be determined based on the first identifier, and/or the second measurement setup can be determined based on the second identifier.

In some possible designs, the first indication information further includes a third identifier, and the third identifier is a part or all of bits of an identifier of the first measurement instance. According to this possible design, the first measurement instance can be determined based on the third identifier.

In some possible designs, the first indication information does not include an identifier of the first measurement instance. According to this possible design, the identifier of the first measurement instance is not included, so that signaling overheads can be reduced.

In some possible designs, the sending the first indication information includes: sending the first indication information by using a frame. In this scenario, the first identifier is carried in a first special user field in the frame, and the second identifier is carried in a second special user field in the frame.

In some possible designs, a user field corresponding to the first station is located between the first special user field and the second special user field, and the second special user field is followed by a user field corresponding to the second station.

In some possible designs, the first special user field is adjacent to the second special user field, the first special user field further carries a quantity of first stations, and the second special user field further carries a quantity of second stations.

In some possible designs, the sending the first indication information includes: sending the first indication information by using a frame. In this scenario, the first identifier is carried in a user field that is in the frame and that corresponds to the first station, and the second identifier is carried in a user field that is in the frame and that corresponds to the second station; or the first identifier and the second identifier are carried in a common field in the frame.

In some possible designs, the first indication information further includes a fourth identifier and a fifth identifier. The fourth identifier is a part or all of bits of an identifier, corresponding to the first measurement setup, of the first measurement instance. The fifth identifier is a part or all of bits of an identifier, corresponding to the second measurement setup, of the first measurement instance.

According to this possible design, one shared measurement instance may have different measurement instance identifiers for different measurement setups. This improves diversity of identifiers.

In some possible designs, the sending the first indication information includes: sending the first indication information by using a frame. In this scenario, the fourth identifier and the first identifier are carried in a first special user field in the frame, and the fifth identifier and the second identifier are carried in a second special user field in the frame; or the fourth identifier and the first identifier are carried in a user field that is in the frame and that corresponds to the first station, and the fifth identifier and the second identifier are carried in a user field that is in the frame and that corresponds to the second station.

In some possible designs, a user field corresponding to the first station is located between the first special user field and the second special user field, and the second special user field is followed by a user field corresponding to the second station; or the first special user field is adjacent to the second special user field, the first special user field further carries a quantity of first stations, and the second special user field further carries a quantity of second stations.

In some possible designs, second indication information in the first indication information indicates that the first measurement instance is a shared measurement instance.

In some possible designs, the second indication information includes a specific measurement setup identifier and/or a specific measurement instance identifier; or the second indication information includes a specific value with a length of X bits, where X is a positive integer.

In some possible designs, the frame that carries the first indication information is a null data PPDU announcement NDPA frame, a trigger frame, a feedback frame, a reporting frame, a request frame, or a polling frame.

In some possible designs, the identifier of the first measurement instance is related to an identifier of a non-shared measurement instance corresponding to the first measurement setup and an identifier of a non-shared measurement instance corresponding to the second measurement setup; or the identifier of the first measurement instance is related to the identifier of the first measurement setup and the identifier of the second measurement setup; or the identifier of the first measurement instance is a candidate identifier, and the candidate identifier is applicable to a shared measurement instance corresponding to any measurement setup.

According to this possible design, selection of an identifier of a shared measurement instance is specified, so that both communication entities have a synchronous understanding of a measurement instance, to improve measurement efficiency.

In some possible designs, the first measurement instance ends when a target frame corresponding to the first measurement instance appears, or the first measurement instance ends when a termination mark corresponding to the first measurement instance appears.

According to this possible design, termination of a measurement instance is identified based on a target frame or a termination mark. In this way, measurement instances can be distinguished when no measurement instance-related identifier exists, to avoid confusion between different measurement instances.

According to a second aspect, a sensing method is provided. The method may be performed by a second device; or may be performed by a component of a second device, for example, a processor, a chip, or a chip system; or may be implemented by a logical module or software capable of implementing all or some of functions of a second device. The method includes: receiving first indication information, and parsing the first indication information. The first indication information indicates that a first measurement setup and a second measurement setup share a first measurement instance.

According to this solution, the first measurement setup and the second measurement setup share the first measurement instance. In this way, a measurement that originally needs to be completed by using a plurality of measurement instances can be centrally completed in one measurement instance, to reduce overheads and improve measurement efficiency.

In some possible designs, the first measurement setup is used to configure a first parameter for a first station, and the second measurement setup is used to configure a second parameter for a second station.

In some possible designs, the first indication information includes a first identifier and a second identifier. The first identifier is a part or all of bits of an identifier of the first measurement setup. The second identifier is a part or all of bits of an identifier of the second measurement setup. The method further includes: determining the first measurement setup based on the first identifier, and/or determining the second measurement setup based on the second identifier.

In some possible designs, the first indication information further includes a third identifier, the third identifier is a part or all of bits of an identifier of the first measurement instance, and the method further includes: determining the first measurement instance based on the third identifier.

In some possible designs, the first indication information does not include an identifier of the first measurement instance.

In some possible designs, the receiving first indication information includes: receiving the first indication information by using a frame, where the first identifier is carried in a first special user field in the frame, and the second identifier is carried in a second special user field in the frame. In this scenario, the parsing the first indication information includes: reading the first identifier from the first special user field, and/or reading the second identifier from the second special user field.

In some possible designs, a user field corresponding to the first station is located between the first special user field and the second special user field, and the second special user field is followed by a user field corresponding to the second station.

In some possible designs, the first special user field is adjacent to the second special user field, the first special user field further carries a quantity of first stations, and the second special user field further carries a quantity of second stations.

In some possible designs, the receiving first indication information includes: receiving the first indication information by using a frame.

The first identifier is carried in a user field that is in the frame and that corresponds to the first station, and the second identifier is carried in a user field that is in the frame and that corresponds to the second station. In this scenario, the parsing the first indication information includes: reading the first identifier from the user field corresponding to the first station, and/or reading the second identifier from the user field corresponding to the second station.

Alternatively, the first identifier and the second identifier are carried in a common field in the frame. In this scenario, the parsing the first indication information includes: reading the first identifier and/or the second identifier from the common field.

In some possible designs, the first indication information further includes a fourth identifier and a fifth identifier. The fourth identifier is a part or all of bits of an identifier, corresponding to the first measurement setup, of the first measurement instance. The fifth identifier is a part or all of bits of an identifier, corresponding to the second measurement setup, of the first measurement instance. The method further includes: determining the first measurement instance based on the fourth identifier or the fifth identifier.

In some possible designs, the receiving first indication information includes: receiving the first indication information by using a frame.

The fourth identifier and the first identifier are carried in a user field that is in the frame and that corresponds to the first station, and the fifth identifier and the second identifier are carried in a user field that is in the frame and that corresponds to the second station. In this scenario, the parsing the first indication information includes: reading the fourth identifier and the first identifier from the user field corresponding to the first station, and/or reading the fifth identifier and the second identifier from the user field corresponding to the second station.

Alternatively, the fourth identifier and the first identifier are carried in a first special user field in the frame, and the fifth identifier and the second identifier are carried in a second special user field in the frame. In this scenario, the parsing the first indication information includes: reading the fourth identifier and the first identifier from the first special user field, and/or reading the fifth identifier and the second identifier from the second special user field.

In some possible designs, a user field corresponding to the first station is located between the first special user field and the second special user field, and the second special user field is followed by a user field corresponding to the second station; or the first special user field is adjacent to the second special user field, the first special user field further carries a quantity of first stations, and the second special user field further carries a quantity of second stations.

In some possible designs, second indication information in the first indication information indicates that the first measurement instance is a shared measurement instance.

In some possible designs, the second indication information includes a specific measurement setup identifier and/or a specific measurement instance identifier; or the second indication information includes a specific value with a length of X bits, where X is a positive integer.

In some possible designs, the frame that carries the first indication information is a null data PPDU announcement NDPA frame, a trigger frame, a feedback frame, a reporting frame, a request frame, or a polling frame.

In some possible designs, the identifier of the first measurement instance is related to an identifier of a non-shared measurement instance corresponding to the first measurement setup and an identifier of a non-shared measurement instance corresponding to the second measurement setup; or the identifier of the first measurement instance is related to the identifier of the first measurement setup and the identifier of the second measurement setup; or the identifier of the first measurement instance is a candidate identifier, and the candidate identifier is applicable to a shared measurement instance corresponding to any measurement setup.

In some possible designs, the first measurement instance ends when a target frame corresponding to the first measurement instance appears, or the first measurement instance ends when a termination mark corresponding to the first measurement instance appears.

For technical effect of the possible designs of the second aspect, refer to technical effect of corresponding possible designs of the first aspect. Details are not described herein again.

In some embodiments, the first device may be a sensing initiator, and correspondingly, the second device is a sensing responder; or the first device may be a sensing responder, and correspondingly, the second device is a sensing initiator; or the first device may be a proxy device, and correspondingly, the second device is a sensing responder; or the first device may be a sensing responder, and correspondingly, the second device is a proxy device.

According to a third aspect, a first device is provided. The first device includes a processing module and a transceiver module.

The processing module is configured to generate first indication information, where the first indication information indicates that a first measurement setup and a second measurement setup share a first measurement instance.

The transceiver module is configured to send the first indication information.

The first device provided in the third aspect is configured to implement any one of the first aspect or the possible designs of the first aspect. For specific details, refer to the descriptions of any one of the first aspect or the possible designs of the first aspect. Details are not described herein again.

According to a fourth aspect, a second device is provided. The second device includes a processing module and a transceiver module.

The transceiver module is configured to receive first indication information.

The processing module is configured to parse the first indication information, where the first indication information indicates that a first measurement setup and a second measurement setup share a first measurement instance.

The second device provided in the fourth aspect is configured to implement any one of the second aspect or the possible designs of the second aspect. For specific details, refer to the descriptions of any one of the second aspect or the possible designs of the second aspect. Details are not described herein again.

According to a fifth aspect, a first device is provided. The first device includes a processing circuit and an output interface that is internally connected to and communicates with the processing circuit.

The processing circuit is configured to generate first indication information, where the first indication information indicates that a first measurement setup and a second measurement setup share a first measurement instance.

The output interface is configured to send the first indication information.

The first device provided in the fifth aspect is configured to implement any one of the first aspect or the possible designs of the first aspect. For specific details, refer to the descriptions of any one of the first aspect or the possible designs of the first aspect. Details are not described herein again.

According to a sixth aspect, a second device is provided. The second device includes a processing circuit and an input interface that is internally connected to and communicates with the processing circuit.

The input interface is configured to receive first indication information.

The processing circuit is configured to parse the first indication information, where the first indication information indicates that a first measurement setup and a second measurement setup share a first measurement instance.

The second device provided in the sixth aspect is configured to implement any one of the second aspect or the possible designs of the second aspect. For specific details, refer to the descriptions of any one of the second aspect or the possible designs of the second aspect. Details are not described herein again.

According to a seventh aspect, a first device is provided. The first device includes a processor and a transceiver that is internally connected to and communicates with the processor.

The processor is configured to generate first indication information, where the first indication information indicates that a first measurement setup and a second measurement setup share a first measurement instance.

The transceiver is configured to send the first indication information.

The first device provided in the seventh aspect is configured to implement any one of the first aspect or the possible designs of the first aspect. For specific details, refer to the descriptions of any one of the first aspect or the possible designs of the first aspect. Details are not described herein again.

According to an eighth aspect, a second device is provided. The second device includes a processor and a transceiver that is internally connected to and communicates with the processor.

The transceiver is configured to receive first indication information.

The processor is configured to parse the first indication information, where the first indication information indicates that a first measurement setup and a second measurement setup share a first measurement instance.

The second device provided in the eighth aspect is configured to implement any one of the second aspect or the possible designs of the second aspect. For specific details, refer to the descriptions of any one of the second aspect or the possible designs of the second aspect. Details are not described herein again.

According to a ninth aspect, an embodiment of this application provides a computer-readable storage medium, configured to store a computer program. The computer program includes instructions for performing any one of the first aspect or the possible implementations of the first aspect.

According to a tenth aspect, an embodiment of this application provides a computer-readable storage medium, configured to store a computer program. The computer program includes instructions for performing any one of the second aspect or the possible implementations of the second aspect.

According to an eleventh aspect, an embodiment of this application provides a computer program product. The computer program product includes instructions for performing any one of the first aspect or the possible implementations of the first aspect.

According to a twelfth aspect, an embodiment of this application provides a computer program product. The computer program product includes instructions for performing any one of the second aspect or the possible implementations of the second aspect.

According to a thirteenth aspect, an embodiment of this application provides a communication system. The communication system includes the first device provided in the third aspect, the fifth aspect, or the seventh aspect, and the second device provided in the fourth aspect, the sixth aspect, or the eighth aspect.

### BRIEF DESCRIPTION OF DRAWINGS

FIG. 1a is an example diagram of a measurement instance according to this application;
FIG. 1b is a first example diagram of a sensing measurement procedure according to this application;
FIG. 2 is a schematic diagram of one-to-one steps in a sensing measurement procedure according to this application;
FIG. 3 is a schematic diagram of a frame structure of an NDP according to this application;
FIG. 4 is a schematic diagram of a structure of a communication system according to this application;
FIG. 5 is a schematic flowchart of a sensing method according to this application;
FIG. 6 is a first schematic diagram of a structure of a frame according to this application;
FIG. 7 is a schematic flowchart of an NDPA sounding phase according to this application;
FIG. 8 is a schematic flowchart of another NDPA sounding phase according to this application;
FIG. 9 is a second schematic diagram of a structure of a frame according to this application;
FIG. 10a is a third schematic diagram of a structure of a frame according to this application;
FIG. 10b is a schematic diagram of a structure of a special user field according to this application;
FIG. 11 is a fourth schematic diagram of a structure of a frame according to this application;
FIG. 12 is a fifth schematic diagram of a structure of a frame according to this application;
FIG. 13 is a second example diagram of a sensing measurement procedure according to this application;
FIG. 14 is a third example diagram of a sensing measurement procedure according to this application;
FIG. 15 is a sixth schematic diagram of a structure of a frame according to this application;
FIG. 16 is a seventh schematic diagram of a structure of a frame according to this application;
FIG. 17 is an eighth schematic diagram of a structure of a frame according to this application;
FIG. 18 is a ninth schematic diagram of a structure of a frame according to this application;
FIG. 19 is a tenth schematic diagram of a structure of a frame according to this application;
FIG. 20 is a fourth example diagram of a sensing measurement procedure according to this application;
FIG. 21 is a fifth example diagram of a sensing measurement procedure according to this application;
FIG. 22 is a sixth example diagram of a sensing measurement procedure according to this application;
FIG. 23 is an example diagram of phases included in a measurement instance according to this application;
FIG. 24 is an example diagram of phases included in another measurement instance according to this application;
FIG. 25 is an example diagram of a measurement instance according to this application;
FIG. 26 is a schematic diagram of a structure of a communication apparatus according to this application; and
FIG. 27 is a schematic diagram of a structure of another communication apparatus according to this application.

### DESCRIPTION OF EMBODIMENTS

In descriptions of this application, "/" indicates an "or" relationship between associated objects, unless otherwise specified. For example, A/B may indicate A or B. In this application, "and/or" describes only an association relationship between associated objects, and indicates that three relationships may exist. For example, A and/or B may indicate the following three cases: Only A exists, both A and B exist, and only B exists, where A and B may be singular or plural.

In descriptions of this application, "a plurality of" means two or more, unless otherwise specified. "At least one of the following items" or a similar expression thereof indicates any combination of the items, including one of the items or any combination of a plurality of the items. For example, at least one of a, b, or c may indicate a, b, c, a and b, a and c, b and c, or a, b, and c, where a, b, and c may be singular or plural.

In addition, to clearly describe technical solutions in embodiments of this application, the terms "first", "second", and the like are used in embodiments of this application to distinguish between identical items or similar items that have basically same functions or purposes. A person skilled in the art can understand that the terms "first", "second", and the like do not limit a quantity or an execution sequence, and the terms "first", "second", and the like do not indicate a definite difference. In addition, in embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. To be precise, the term "example", "for example", or the like is intended to present a related concept in a specific manner for ease of understanding.

It can be understood that an "embodiment" mentioned throughout this specification means that particular features, structures, or characteristics related to this embodiment are included in at least one embodiment of this application. Therefore, embodiments in the entire specification do not necessarily indicate a same embodiment. In addition, these particular features, structures, or characteristics may be combined in one or more embodiments in any appropriate manner. It can be understood that sequence numbers of processes do not mean execution sequences in various embodiments of this application. The execution sequences of the processes should be determined based on functions and internal logic of the processes, and should not be construed as any limitation on implementation processes of embodiments of this application.

It can be understood that, in this application, "when" and "if" mean that corresponding processing is performed in an objective circumstance, but do not constitute a limitation on time, do not require a determining action during implementation, and do not mean any other limitation.

It can be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features according to requirements. Correspondingly, an apparatus provided in embodiments of this application may also correspondingly implement these features or functions. Details are not described herein.

In this application, for identical or similar parts in embodiments, mutual reference may be made between the embodiments, unless otherwise specified. In embodiments of this application and implementations/implementation methods of the embodiments, unless otherwise specified or a logical conflict occurs, terms and/or descriptions in different embodiments and implementations/implementation methods of the embodiments are consistent and may be mutually referenced. Technical features in different embodiments and implementations/implementation methods of the embodiments may be combined to form a new embodiment, implementation, or implementation method based on an internal logical relationship thereof. The following implementations of this application do not constitute a limitation on the protection scope of this application.

For ease of understanding technical solutions in embodiments of this application, conventional technologies in this application are first briefly described below.

### 1. Sensing initiator, sensing responder, sensing transmitter, and sensing receiver:

Sensing initiator (Sensing initiator): a station (station, STA) that initiates a wireless local area network (wireless local area network, WLAN) sensing procedure.

Sensing responder (Sensing responder): a station that participates in the WLAN sensing procedure initiated by the sensing initiator.

Sensing transmitter (Sensing transmitter): a station that sends a physical layer protocol data unit (physical protocol data unit, PPDU) for sensing measurement in the sensing procedure.

Sensing receiver (Sensing receiver): a station that receives the PPDU sent by the sensing transmitter and performs sensing measurement in the sensing procedure.

In this application, the station may be an access point station (access point station, AP STA) or a non-access point station (non-access point station, non-AP STA). For ease of description, the AP STA is referred to as an AP in the following embodiments of this application.

### 2. Sensing procedure:

A basically recognized sensing procedure in a WLAN standard is mainly divided into the following five steps:

### (1) Sensing session setup (Sensing session setup):

This step indicates to establish a sensing session between stations. A related parameter may be exchanged in this step (a specific parameter is to be determined). A sensing session may be understood as a protocol between two stations that is agreed upon by a sensing initiator and a sensing responder. One sensing initiator may retain sensing sessions with a plurality of sensing responders.

In this application, the sensing session may also be referred to as a sensing period. Correspondingly, the sensing session setup may also be referred to as sensing period setup. The terms are interchangeable. This is not specifically limited in this application.

### (2) Measurement setup (Measurement setup):

In this step, a sensing initiator and a sensing responder exchange and unify some parameters, attributes, or the like to be used in a sensing procedure. For example, the parameters may include roles (for example, a sensing transmitter or a sensing receiver) of the sensing initiator and the sensing responder and a measurement feedback type.

To clearly identify measurement setups, a manner of distinguishing between measurement setups by using reference signs is used in a current standard discussion. To be specific, each measurement setup is identified by an identifier (identifier, ID).

### (3) Measurement instance (Measurement instance):

Sensing measurement is performed in a measurement instance, and a plurality of sensing responders are allowed to join one measurement instance. A measurement instance is identified by an identifier. In a current standard discussion, one measurement instance is bound to one measurement setup, in other words, one measurement instance corresponds to a parameter configured by one measurement setup. To be specific, in one measurement instance, a measurement corresponding to one measurement setup bound to the measurement instance is performed, and measurements corresponding to a plurality of different measurement setups cannot be performed.

In this application, the measurement instance may also be referred to as a measurement entity. The terms are interchangeable. This is not specifically limited in this application.

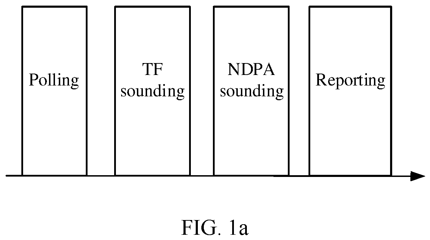

Measurement instances may be classified into a trigger-based (trigger-based, TB) sensing measurement instance (TB sensing measurement instance) and a non-trigger-based sensing measurement instance (Non-TB sensing measurement instance). For example, as shown in FIG. 1a, the trigger-based sensing measurement instance may include the following phases: a polling phase (polling phase), a null data physical layer protocol data unit (physical protocol data unit, PPDU) announcement (null data PPDU announcement, NDPA) sounding phase (NDPA sounding phase), a trigger frame (trigger frame, TF) sounding phase (TF sounding phase), a reporting phase, and the like.

The polling phase is used to determine whether a polled station can participate in measurement and feedback in a current measurement instance.

In the NDPA sounding phase, a sensing initiator may notify, by using an NDPA frame, a sensing responder that the sensing responder is to send a null data PPDU (null data PPDU, NDP) after the NDPA frame. The NDPA frame may indicate a sensing responder that needs to monitor an NDP, and other configuration information. The sensing responder may learn of channel information or the like by measuring an NDP after the NDPA.

In the trigger frame sounding phase, the sensing initiator may trigger, by using a trigger frame, the sensing responder to send an NDP, and the sensing initiator measures the NDP to perform sensing.

In the reporting phase, the sensing responder may send sensing measurement-related information, for example, channel information, to the sensing initiator by using a feedback (feedback) frame. The feedback frame may also be referred to as a reporting frame. The terms are interchangeable. This is not limited.

Optionally, a measurement instance may include both an NDPA sounding phase and a trigger frame sounding phase; or may include an NDPA sounding phase but not a trigger frame sounding phase; or may include a trigger frame sounding phase but not an NDPA sounding phase.

### (4) Measurement setup termination (Measurement setup termination):

The measurement setup termination is used to terminate a measurement setup procedure corresponding to a sensing responder. To be specific, after the measurement setup termination, the sensing responder is no longer bound to a corresponding measurement setup, but may still be in a sensing session.

### (5) Sensing session termination (Sensing session termination)

The sensing session termination is used to terminate a sensing session. After the sensing session termination, a station no longer participates in a sensing measurement procedure or the like.

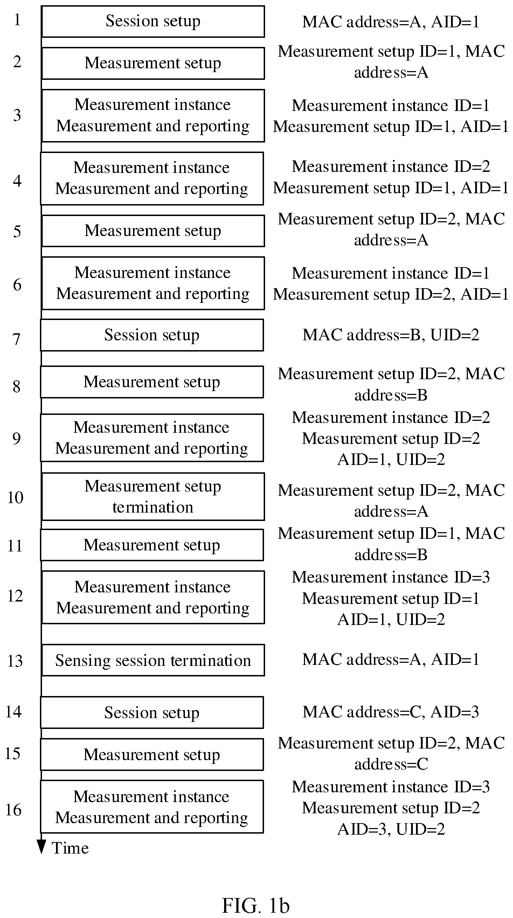

For example, FIG. 1b shows 16 steps to clearly describe a process of the foregoing sensing procedure. As shown in FIG. 1b, step 1 is a session setup step. In this step, a station (denoted as a station A) with a medium access control (medium access control, MAC) address A and an association identifier (association identifier, AID) 1 joins a sensing session.

Step 2 is a measurement setup step for configuring a related parameter for the station A. For ease of description, a measurement setup corresponding to step 2 is denoted as a measurement setup 1.

Step 3 is a measurement instance step. For ease of description, a measurement instance corresponding to step 3 is denoted as a measurement instance 1. The measurement instance is bound to the measurement setup 1 corresponding to step 2. In this way, sensing measurement related to the station A can be performed in the measurement instance. To sum up, in steps 1, 2, and 3, the station A joins the sensing session, the related parameter is configured for the station A, and then measurement and feedback corresponding to the station A are performed.

Step 4 indicates another measurement instance denoted as a measurement instance 2. The measurement instance 2 is bound to the measurement setup 1. It can be learned from the foregoing descriptions that the measurement instances in step 3 and step 4 are bound to one measurement setup (namely, the measurement setup 1). To be specific, measurement parameters and the like in step 3 and step 4 may be the same, and a measurement in step 4 may be considered as a repeated measurement of the measurement in step 3.

Similar to steps 2 and 3, steps 5 and 6 indicate a measurement instance 1 for a measurement setup 2. New (compared with step 3 and step 4) measurement and feedback corresponding to the station A may be performed in step 6.

Steps 7, 8, and 9 are similar to steps 1, 2, and 3. A station (denoted as a station B) with a MAC address B and an unassociated identifier (unassociated identifier, UID) 2 joins the sensing session, and measurement and feedback corresponding to the station B are performed in a measurement instance 2 for the measurement setup 2.

In descriptions of this application, a measurement instance Y for a measurement setup X may be understood as a measurement instance Y bound to a measurement setup X.

Step 10 is a measurement setup termination step indicating that the station A with the AID 1 is unbound from the measurement setup 2.

Steps 11 and 12 indicate that related configuration is performed for the station B with the UID 2 in the measurement setup 1, and measurement and feedback corresponding to the station B are performed in a measurement instance 3 for the measurement setup 1.

Step 13 is a sensing session termination step indicating that the station A with the AID 1 exits the sensing session and no longer participates in a sensing measurement procedure or the like.

Similar to steps 1, 2, and 3, steps 14, 15, and 16 indicate that a station (denoted as a station C) with a MAC address C and an AID 3 joins the sensing session, related configuration is performed for the station in the measurement setup 2, and then measurement and feedback corresponding to the station C are performed in the measurement instance 3 for the measurement setup 2. In addition, measurement and feedback corresponding to the station B are performed in the measurement instance 3 for the measurement setup 2.

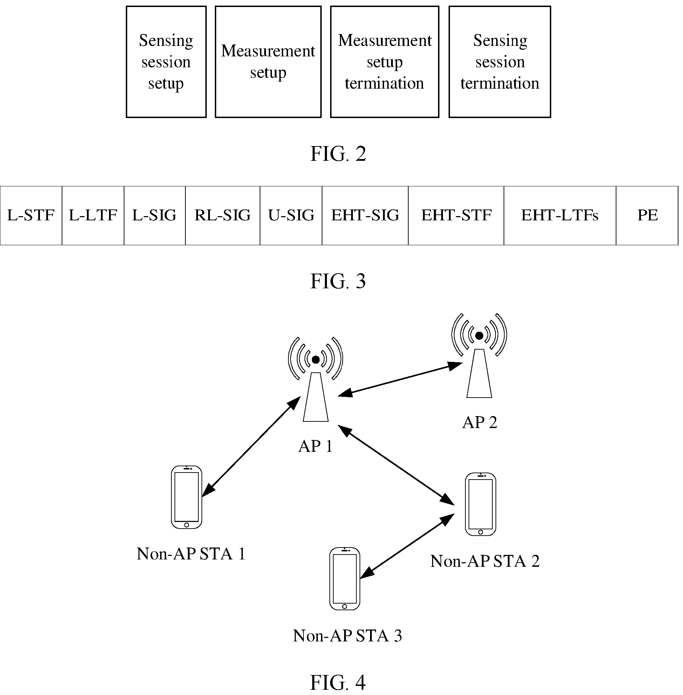

To sum up, four steps of sensing session setup, measurement setup, measurement setup termination, and sensing session termination shown in FIG. 2 are one-to-one setup steps. To be specific, one step corresponds to (or is bound to) one sensing initiator and one sensing responder. Certainly, a sensing initiator may simultaneously perform sensing session setups with a plurality of stations, for example, in an orthogonal frequency division multiple access (orthogonal frequency division multiple access, OFDMA) or multi-user multiple-input multiple-output (multi-user multiple-input multiple-output, MU-MIMO) form. However, this means that a plurality of sensing session setup steps are simultaneously performed, but not that one sensing session setup step corresponds to a plurality of sensing responders.

For a measurement instance step, a plurality of sensing responders are allowed to join one measurement instance step. For example, in step 16 shown in FIG. 1b, sensing measurement related to both the station B and the station C may be performed in the measurement instance 3 for the measurement setup 2.

### 3. Null data physical layer protocol data unit (physical protocol data unit, PPDU) (null data PPDU, NDP):

An NDP is a PPDU without data fields. During sensing measurement, a station may perform channel measurement based on some fields in an NDP, to perform sensing based on related information obtained through measurement.

For example, as shown in FIG. 3, an NDP format in 802.11be may include a legacy-short training field (legacy-short training field, L-STF), a legacy-long training field (legacy-long training field, L-LTF), a legacy-signal field (legacy-signal field, L-SIG), a repeated legacy-signal field (repeat legacy-signal field, RL-SIG), a universal signal field (universal signal field, U-SIG), an extremely high throughput (extremely high throughput, EHT) signal field (EHT signal field, EHT-SIG), an EHT legacy-long training field (EHT legacy-long training field, EHT-LTF), and a packet extension (packet extension) field.

Based on the NDP format shown in FIG. 3, during sensing measurement, a station may measure an EHT-LTF in an NDP, to perform sensing based on measurement information.

In the foregoing sensing procedure, measurement is performed in a manner in which one measurement instance is bound to one measurement setup. This manner has low measurement efficiency. Based on this, this application provides a sensing method, to enable a plurality of measurement setups to share one measurement instance, to improve measurement efficiency.

Embodiments of this application are applicable to a wireless local area network (wireless local area network, WLAN) scenario, the Institute of Electrical and Electronics Engineers (institute of electrical and electronics engineers, IEEE) 802.11 bf standard, and other 802.11 system standards such as the 802.11a/b/g standard, the 802.11n standard, the 802.11ac standard, the 802.11 ax standard or a next-generation standard thereof, for example, the 802.11be standard, or a further next-generation standard. Alternatively, embodiments of this application are applicable to a wireless local area network system, for example, an internet of things (internet of things, IoT) network or a vehicle-to-everything (Vehicle to X, V2X) network. Certainly, embodiments of this application are also applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a fifth-generation (5th generation, 5G) communication system.

The foregoing communication systems to which this application is applicable are merely examples for description, and communication systems to which this application is applicable are not limited thereto. This is uniformly described herein, and details are not described below again.

First, this application provides a WLAN communication system to which embodiments of this application are applicable. The WLAN communication system includes a plurality of stations, and the plurality of stations include at least one sensing initiator and at least two sensing responders. For example, in the following embodiments, an example in which a third station of the plurality of stations serves as a sensing initiator and a first station and a second station serve as sensing responders is used for description.

In addition, a quantity of first stations and a quantity of second stations are not specifically limited in this application. The system may include at least one first station and at least one second station.

Optionally, the WLAN communication system may further include a proxy (Proxy) device. The proxy device is configured to serve as a proxy for a sensing initiator to interact with a sensing responder. For example, in an NDPA sounding phase of a measurement instance, the sensing initiator may control or request the proxy device, and the proxy device sends an NDPA and an NDP to the sensing initiator. In a trigger frame sounding phase, the sensing initiator may control or request the proxy device, and the proxy device sends a trigger frame to the sensing initiator. Further, the proxy device may receive an NDP sent by the sensing responder, and measure the NDP.

Optionally, the proxy device in this application may also be referred to as an intermediate device. The terms are interchangeable. This is not specifically limited in this application.

Optionally, in this application, both the sensing initiator and the sensing responder may be APs; or both the sensing initiator and the sensing responder may be non-AP STAs; or one of the sensing initiator and the sensing responder is an AP, and the other is a non-AP STA. The proxy device may be an AP or a non-AP STA. This is not limited.

In an example, FIG. 4 is a diagram of an architecture of a WLAN communication system according to this application. In FIG. 4, for example, the WLAN communication system includes an AP 1, an AP 2, a non-AP STA 1, a non-AP STA 2, and a non-AP STA 3. It should be understood that a quantity of APs and a quantity of non-AP STAs in FIG. 4 are merely examples, and there may alternatively be more or fewer APs and non-AP STAs.

For example, in the communication system shown in FIG. 4, the AP 1 may be a third station and serve as a sensing initiator, and correspondingly, the non-AP STA 1 and the non-AP STA 2 may be a first station and a second station respectively and serve as sensing responders, or the non-AP STA 1 and the AP 2 may be a first station and a second station respectively and serve as sensing responders; or the non-AP STA 2 may be a third station and serve as a sensing initiator, and correspondingly, the non-AP STA 3 and the AP 1 may be a first station and a second station respectively and serve as sensing responders. It should be understood that the APs and the non-AP STAs in FIG. 4 may alternatively be combined in another manner to serve as a sensing initiator and a sensing responder. This is not limited.

The non-AP STA included in embodiments of this application may be a wireless communication chip, a wireless sensor, or a wireless communication terminal, for example, a user terminal, a user apparatus, an access apparatus, a subscriber station, a subscriber unit, a mobile station, a user agent, or user equipment that supports a wireless fidelity (wireless fidelity, Wi-Fi) communication function. The user terminal may include various devices with a wireless communication function, for example, a handheld device, a vehicle-mounted device, a wearable device, an internet of things (internet of things, IoT) device, a computing device, or another processing device connected to a wireless modem, and devices in various forms, for example, user equipment (user equipment, UE), a mobile station (mobile non-AP station, MS), a terminal (terminal), terminal equipment (terminal equipment), a portable communication device, a handset, a portable computing device, an entertainment device, a game device or system, a global positioning system device, or any other suitable device configured for network communication through a wireless medium. In addition, the non-AP STA may support the 802.11bf standard. The non-AP STA may also support a plurality of WLAN standards such as 802.11be or a next-generation standard of 802.11be, 802. 11 ax, 802.11ac, 802.11n, 802.11g, 802.11b, and 802.11a.

The AP included in embodiments of this application may be an apparatus that provides a wireless communication function for a non-AP STA associated with the AP and that is deployed in a wireless communication network, and is mainly deployed in a home, a building, or a campus. A typical coverage radius is tens of meters to hundreds of meters. Certainly, the AP may alternatively be deployed outdoors. The AP is equivalent to a bridge connecting a wired network and a wireless network, and is mainly intended to connect wireless network clients together, and then connect the wireless network to Ethernet. Specifically, the AP may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP may support the 802.11bf standard. The AP may also support WLAN standards such as 802.11be or a next-generation standard of 802.11be, 802.11ax, 802.11ac, 802.11n, 802.11g, 802.11b, and 802.11a.

With reference to accompanying drawings of this specification, the following describes in detail a sensing method provided in embodiments of this application by using interaction between a first device and a second device as an example. The first device may be a sensing initiator, and correspondingly, the second device is a sensing responder; or the first device may be a sensing responder, and correspondingly, the second device is a sensing initiator; or the first device may be a proxy device, and correspondingly, the second device is a sensing responder; or the first device may be a sensing responder, and correspondingly, the second device is a proxy device.

It can be understood that, in embodiments of this application, an execution entity may perform a part or all of steps in embodiments of this application. These steps or operations are merely examples. In embodiments of this application, other operations or variations of various operations may be further performed. In addition, the steps may be performed in a sequence different from that presented in embodiments of this application, and not all operations in embodiments of this application may be performed.

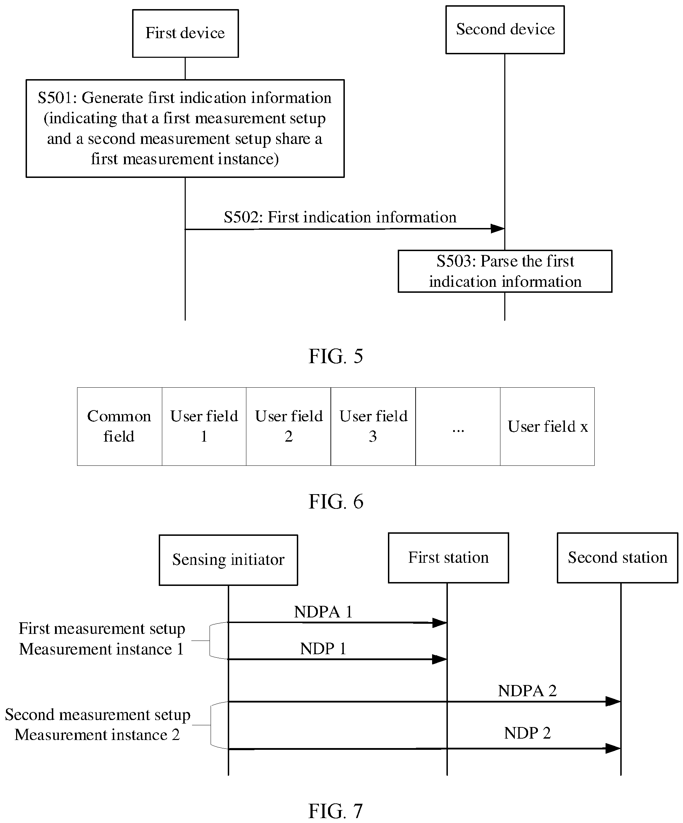

FIG. 5 is a schematic flowchart of a sensing method according to an embodiment of this application. The sensing method includes the following steps.

S501: A first device generates first indication information.

The first indication information indicates that a first measurement setup and a second measurement setup share a first measurement instance. It should be noted that an example in which the first measurement setup and the second measurement setup share the first measurement instance is used in this application. In practical application, more measurement setups may alternatively share the first measurement instance. For example, three or more measurement setups may share the first measurement instance. A quantity of measurement setups that share the first measurement instance is not specifically limited in this application.

Optionally, the first measurement setup is different from the second measurement setup. The first measurement setup is used to configure a first parameter for a first station, and the second measurement setup is used to configure a second parameter for a second station.

Optionally, that the first measurement setup and the second measurement setup share the first measurement instance may be understood as follows: Sensing measurement procedures, reporting procedures, and the like corresponding to the first measurement setup and the second measurement setup may be performed in the first measurement instance; or stations corresponding to the first measurement setup and the second measurement setup may join the first measurement instance, that is, stations corresponding to different measurement setups may join one measurement instance.

S502: The first device sends the first indication information. Correspondingly, a second device receives the first indication information.

Optionally, the first device may send the first indication information to the second device in a measurement instance, or may send the first indication information to the second device in a sensing session setup or a measurement setup. An occasion at which the first device sends the first indication information is not specifically limited in this application.

Optionally, that the first device sends the first indication information may include: The first device sends the first indication information by using a frame. Correspondingly, the second device receives the first indication information by using the frame.

Optionally, the frame for sending the first indication information may be a management frame, a data frame, or a control frame. For example, the frame may be an NDPA frame, a trigger frame, a feedback frame, a reporting frame, a polling frame, or a request frame.

Optionally, the reporting frame and the feedback frame have similar functions, and may be used to send sensing measurement-related information in a measurement instance phase. The reporting frame may also be referred to as a report frame. The terms are interchangeable.

Optionally, if the first device sends the first indication information in a measurement instance by using a frame, the frame may be an NDPA frame, a trigger frame, a feedback frame, a reporting frame, or a polling frame. If the first device sends the first indication information in a sensing session setup (or a measurement setup) by using a frame, the frame may be a request frame, another management frame in the sensing session setup (or the measurement setup), a data frame, or a control frame.

Optionally, as shown in FIG. 6, the frame may include a common field and a plurality of user fields. The plurality of user fields are in a one-to-one correspondence with a plurality of stations. A user field is used to carry information related to a station corresponding to the user field, in other words, information carried in a user field is valid only for a user corresponding to the user field. Correspondingly, each station reads content in a user field corresponding to the station. To be specific, a user field may be understood as signaling at a "per-user (per user)" level. The common field is used to carry information shared by the plurality of stations corresponding to the plurality of user fields, and each station needs to read the information carried in the common field.

Optionally, in addition to the common field and the user field, the frame may further include another field. A function of the another field is not specifically limited in this application.

Optionally, the common field may include a plurality of fields, and the user field may also include a plurality of fields. Formats of the common field and the user field are not specifically limited in this application.

Optionally, the common field and the user field may alternatively have other names. Names of the common field and the user field are not specifically limited in this application. For example, the user field may also be referred to as a station field, a per-user field, a user information field, or a station information field.

Further, in different frames, the common field and the user field may also have different names. For example, when the frame is an NDPA frame, the common field may be a sounding dialog token (Sounding Dialog Token) field, and the user field may be a station information (STA Info) field; or when the frame is a trigger frame, the common field may be a common information (Common Info) field, and the user field may be a user information (User Info) field.

Optionally, the frame that carries the first indication information may be referred to as an aggregated frame. For example, the NDPA frame, the trigger frame, the feedback frame, the reporting frame, the polling frame, or the request frame may be referred to as an aggregated NDPA frame, an aggregated trigger frame, an aggregated feedback frame, an aggregated reporting frame, an aggregated polling frame, or an aggregated request frame. In addition, "aggregated" may be replaced with "shared".

S503: The second device parses the first indication information.

Optionally, after parsing the first indication information, the second device may perform related processing based on indication information obtained through parsing. For example, when the second device is a sensing responder (for example, a first station), the second device may perform, based on the first indication information, sensing measurement corresponding to the first measurement setup in the first measurement instance; or when the second device is a sensing responder (for example, a second station), the second device may perform, based on the first indication information, sensing measurement corresponding to the second measurement setup in the first measurement instance.

According to this solution, the first measurement setup and the second measurement setup share the first measurement instance. In this way, a measurement that originally needs to be completed by using a plurality of measurement instances can be centrally completed in one measurement instance, to reduce overheads and improve measurement efficiency.

For example, according to an existing standard, measurement related to the first station needs to be performed in a measurement instance 1 for the first measurement setup, and measurement related to the second station needs to be performed in a measurement instance 2 for the second measurement setup. An NDPA sounding phase in a measurement instance is used as an example. As shown in FIG. 7, in the existing standard, a sensing initiator (or a proxy device) needs to send an NDPA 1 and an NDP 1 to the first station in the measurement instance 1, and send an NDPA 2 and an NDP 2 to the second station in the measurement instance 2.

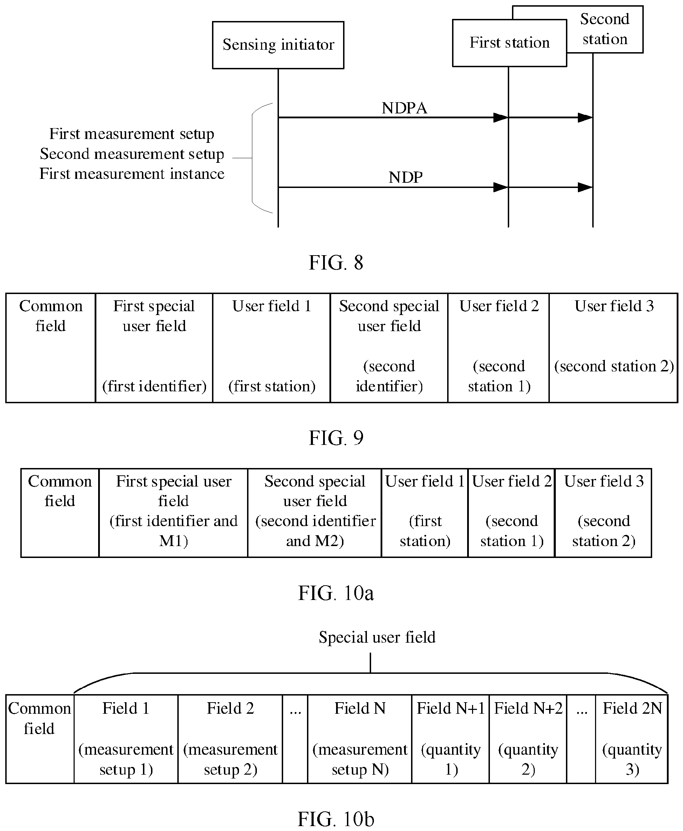

According to the solution of this application, the first measurement setup and the second measurement setup share the first measurement instance, so that measurement related to both the first station and the second station may be performed in the first measurement instance. An NDPA sounding phase in a measurement instance is used as an example. As shown in FIG. 8, in this application, a sensing initiator (or a proxy device) sends an NDPA and an NDP in the first measurement instance, and both the first station and the second station can receive the NDPA and the NDP. It can be learned from the foregoing descriptions that, in comparison with the existing standard, overheads can be reduced by approximately half in the solution of this application. In addition, measurement efficiency can be improved because measurement related to the first station and the second station can be simultaneously performed.

The foregoing describes an overall process of the sensing method provided in this application. The following describes in detail content included in the first indication information, a carrying manner, selection of an identifier of a measurement instance, and the like.

Optionally, the first indication information may include a first identifier and a second identifier. The first identifier is a part or all of bits of an identifier of the first measurement setup. The second identifier is a part or all of bits of the second measurement setup. For example, if the identifier of the first measurement setup includes N bits, the first identifier may be some of the N bits, for example, the first x bits or the last y bits of the N bits; or the first identifier may be the N-bit identifier. The second identifier is similar to the first identifier, and details are not described again.

Optionally, after receiving the first indication information, the second device may determine the first measurement setup based on the first identifier, and/or determine the second measurement setup based on the second identifier. For example, when the second device is the first station, the second device may determine the first measurement setup based on the first identifier; when the second device is the second station, the second device may determine the second measurement setup based on the second identifier; or when the second device is the third station or the proxy device, the second device may determine the first measurement setup based on the first identifier, and determine the second measurement setup based on the second identifier.

In some embodiments, when the first device sends the first indication information by using a frame, the first identifier is carried in a first special user field in the frame, and the second identifier is carried in a second special user field in the frame.

Optionally, lengths of the first special user field and the second special user field may be the same as or different from a length of the user field. This is not limited.

Optionally, the first special user field and the second special user field may further include a special station identifier or a special AID indicating that the field is a special user field. The special station identifier or the special AID is not used to identify a station. After recognizing the special station identifier or the special AID, the second device may learn that the field further carries a measurement setup-related identifier.

Optionally, after receiving the frame for sending the first indication information, the second device may read the first identifier from the first special user field, and/or read the second identifier from the second special user field.

In a possible implementation, as shown in FIG. 9, a user field corresponding to the first station is located between the first special user field and the second special user field, and the second special user field is followed by a user field corresponding to the second station. The user field corresponding to the second station is the 1^{st} to the (M2)^{th} fields after the second special user field, and M2 is a quantity of second stations. In FIG. 9, an example in which a quantity M1 of first stations is 1 and the quantity M2 of second stations is 2 is used for description.

Optionally, in this implementation, a user corresponding to a user field after a special user field A is bound to a measurement setup A corresponding to the special user field A. When a special user field B carrying an identifier related to another measurement setup B appears, a user corresponding to a user field after the special user field B is bound to the measurement setup B.

To be specific, as shown in FIG. 9, a user field 1 is a user field corresponding to the first station, and the first station is bound to the first measurement setup; and a user field 2 is a user field corresponding to a second station 1, a user field 3 is a user field corresponding to a second station 2, and the second station 1 and the second station 2 are bound to the second measurement setup.

Optionally, in this implementation, in addition to the first identifier, the first special user field may further carry the quantity of first stations; and in addition to the second identifier, the second special user field may further carry the quantity of second stations. In another possible implementation, as shown in FIG. 10a, the first special user field is adjacent to the second special user field, the first special user field further carries a quantity of first stations, and the second special user field further carries a quantity of second stations.

Optionally, in this implementation, the 1^{st} to the (M1)^{th} fields after the last special user field are user fields respectively corresponding to M1 first stations, and stations corresponding to the M1 user fields are bound to a measurement setup corresponding to the 1^{st} special user field, that is, a first measurement setup; the 1^{st} to the (M2)^{th} fields after a user field corresponding to the last first station are user fields respectively corresponding to M2 second stations, and stations corresponding to the M2 user fields are bound to a measurement setup corresponding to the 2^{nd} special user field, that is, a second measurement setup; and so on.

To be specific, as shown in FIG. 10a, the last special user field is the second special user field, the 1^{st} field, namely, a user field 1, after the second special user field is a user field corresponding to the first station, and the first station is bound to the first measurement setup; and the 1^{st} field (namely, a user field 2) after the user field 1 is a user field corresponding to a second station 1, the 2^{nd} field (namely, a user field 3) after the user field 1 is a user field corresponding to a second station 2, and the second station 1 and the second station 2 are bound to the second measurement setup.

It should be noted that an order of the first special user field and the second special user field in FIG. 10a may alternatively be reversed, and an order of subsequent user fields is also reversed correspondingly.

It should be noted that, in FIG. 10a, an example in which one special user field carries (or corresponds to) one measurement setup and one quantity is used for description. In practical application, a plurality of measurement setups and a plurality of quantities may alternatively be carried in one special user field, provided that a measurement setup and a quantity of stations corresponding to the measurement setup can be indicated. For example, the first special user field and the second special user field in FIG. 10a may be combined into one special user field.

Alternatively, as shown in FIG. 10b, the special user field may include 2N fields, where the first N fields may be used to carry measurement setups, and the last N fields are used to carry quantities. The fields for carrying measurement setups are in a one-to-one correspondence with the fields for carrying quantities in sequence. To be specific, a field N+1 corresponds to a field 1, a quantity of stations corresponding to a measurement setup 1 is a quantity 1, a field N+2 corresponds to a field 2, a quantity of stations corresponding to a measurement setup 2 is a quantity 2, and so on. The special user field may be followed sequentially by quantity-1 user fields, quantity-2 user fields, ..., and quantity-N user fields. The quantity-1 user fields correspond to stations bound to the measurement setup 1, the quantity-2 user fields correspond to stations bound to the measurement setup 2, and so on.

To sum up, in this embodiment, when the first device sends information by using a frame, the frame may include a special user field, the special user field may divide a plurality of user fields into different regions, and user fields in different regions correspond to different measurement setup-related identifiers, measurement instance-related identifiers, or the like. The division of the user field regions may be indicated by a location and/or content of the special user field.

For example, as shown in FIG. 9, user fields are divided into two regions by a location of a special user field. A first region includes the user field 1 after the first special user field. A second region includes the user field 2 and the user field 3 after the second special user field. Alternatively, as shown in FIG. 10a, user fields are divided into two regions by content (for example, a quantity) in a special user field. A first region includes M1 user fields, namely, the user field 1. A second region includes M2 user fields, including the user field 2 and the user field 3.

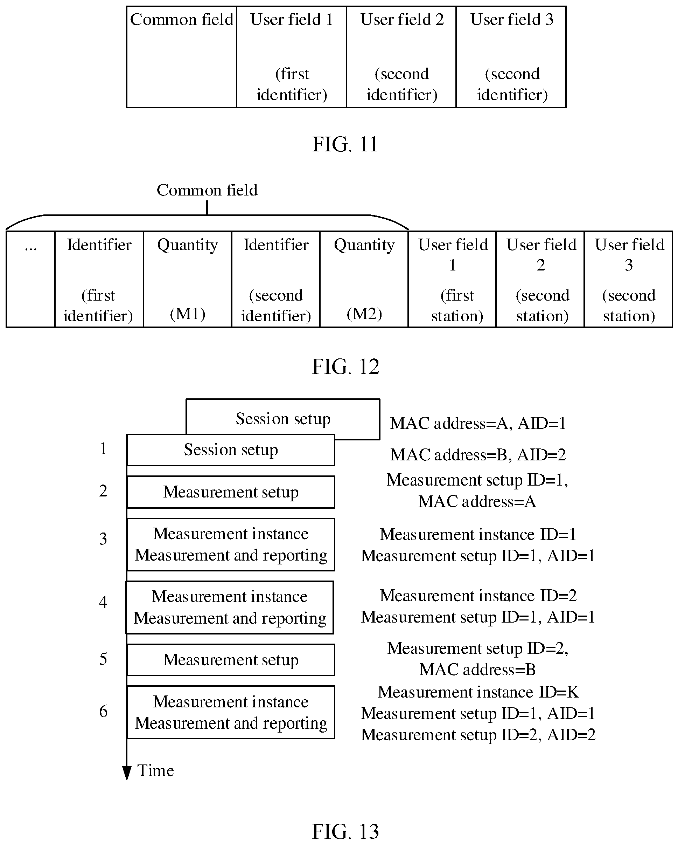

In some other embodiments, when the first device sends the first indication information by using a frame, as shown in FIG. 11, the first identifier is carried in a user field that is in the frame and that corresponds to the first station, and the second identifier is carried in a user field that is in the frame and that corresponds to the second station. In FIG. 11, an example in which a quantity M1 of first stations is 1 and a quantity M2 of second stations is 2 is used for description.

Optionally, in this embodiment, a station is bound to a measurement setup corresponding to an identifier carried in a user field corresponding to the station. To be specific, the first station is bound to the first measurement setup, and the second station is bound to the second measurement setup.

Optionally, after receiving the frame for sending the first indication information, the second device may read the first identifier from the user field corresponding to the first station, and/or read the second identifier from the user field corresponding to the second station.

In still some other embodiments, when the first device sends the first indication information by using a frame, as shown in FIG. 12, both the first identifier and the second identifier are carried in a common field in the frame. In addition, the common field further carries a quantity M1 of first stations and a quantity M2 of second stations.

For example, in FIG. 12, an example in which the quantity M1 of first stations is 1, the quantity M2 of second stations is 2, the first identifier and the second identifier are carried in identifier fields in the common field, and the quantity of first stations and the quantity of second stations are carried in quantity fields in the common field is used for description. In FIG. 12, "..." in the common field indicates that the common field may further include another field. The another field is not specifically limited in this application.

Optionally, in this embodiment, the 1^{st} to the (M1)^{th} user fields are user fields corresponding to the M1 first stations, and stations corresponding to the M1 user fields are bound to a measurement setup corresponding to the 1^{st} identifier field in the common field, that is, a first measurement setup; the 1^{st} to the (M2)^{th} fields after a user field corresponding to the last first station are user fields respectively corresponding to the M2 second stations, and stations corresponding to the M2 user fields are bound to a measurement setup corresponding to the 2^{nd} identifier field in the common field, that is, a second measurement setup; and so on.

To be specific, as shown in FIG. 12, the 1^{st} user field, namely, a user field 1, is a user field corresponding to the first station, and the first station is bound to the first measurement setup; and the 1^{st} field (namely, a user field 2) after the user field 1 is a user field corresponding to a second station 1, the 2^{nd} field (namely, a user field 3) after the user field 1 is a user field corresponding to a second station 2, and the second station 1 and the second station 2 are bound to the second measurement setup.

It should be noted that, in FIG. 12, an example in which a quantity of stations bound to a measurement setup corresponding to an identifier is carried after the identifier is used for description. In practical application, there may be another implementation. For example, the first identifier is adjacent to the second identifier, and a quantity M1 of first stations and M2 are carried after the second identifier.

Optionally, after receiving the frame for sending the first indication information, the second device may read the first identifier and/or the second identifier from the common field.

An identifier related to the first measurement instance may be implemented in the following two manners.

Manner 1: The first indication information includes a third identifier. The third identifier is a part or all of bits of an identifier of the first measurement instance. Correspondingly, the second device further determines the first measurement instance based on the third identifier.

That is, in the manner 1, for a plurality of measurement setups that share a measurement instance, an identifier related to the shared measurement instance remains the same.

For example, an AID of the first station is 1, a MAC address of the first station is A, an AID of the second station is 2, a MAC address of the second station is 2, the identifier of the first measurement setup is 1, and the identifier of the second measurement setup is 2. As shown in FIG. 13, it is assumed that both the first station and the second station join a sensing session in step 1, and the first station joins a measurement instance 1 and a measurement instance 2 for a measurement setup 1 in step 2 to step 4. If the second station is bound to the second measurement setup in step 5, measurement may be performed on the first station and the second station in step 6 because the first measurement setup and the second measurement setup share the first measurement instance. In FIG. 13, an example in which the identifier of the first measurement instance is K is used for description. To be specific, the identifier of the first measurement instance is K for both the first measurement setup and the second measurement setup.

It should be noted that, in FIG. 13, a complete identifier of a measurement setup and a complete identifier of a measurement instance are used as examples for identification. The complete identifier may alternatively be replaced with some bits of the complete identifier. This is not limited.

Optionally, when the first device sends the first indication information by using a frame, the third identifier may be carried in a common field in the frame. In addition, the third identifier, the first identifier, and the second identifier may be carried in one frame or different frames.

For example, the third identifier, the first identifier, and the second identifier are carried in one frame. The third identifier may be carried in the common field in the frame structures shown in FIG. 9 to FIG. 12.

Manner 2: The first indication information includes a fourth identifier and a fifth identifier.

The fourth identifier is a part or all of bits of an identifier, corresponding to the first measurement setup, of the first measurement instance. The fifth identifier is a part or all of bits of an identifier, corresponding to the second measurement setup, of the first measurement instance. Correspondingly, the second device may determine the first measurement instance based on the fourth identifier or the fifth identifier.

That is, in the manner 2, for a plurality of measurement setups that share one measurement instance, identifiers of the shared measurement instance are independent of each other. To be specific, the first measurement instance may have two identifiers, where one is an identifier, corresponding to the first measurement setup, of the first measurement instance, for example, K1, and the other is an identifier, corresponding to the second measurement setup, of the first measurement instance, for example, K2. In this case, the fourth identifier is a part or all of bits of K1, and the fifth identifier is a part or all of bits of K2.

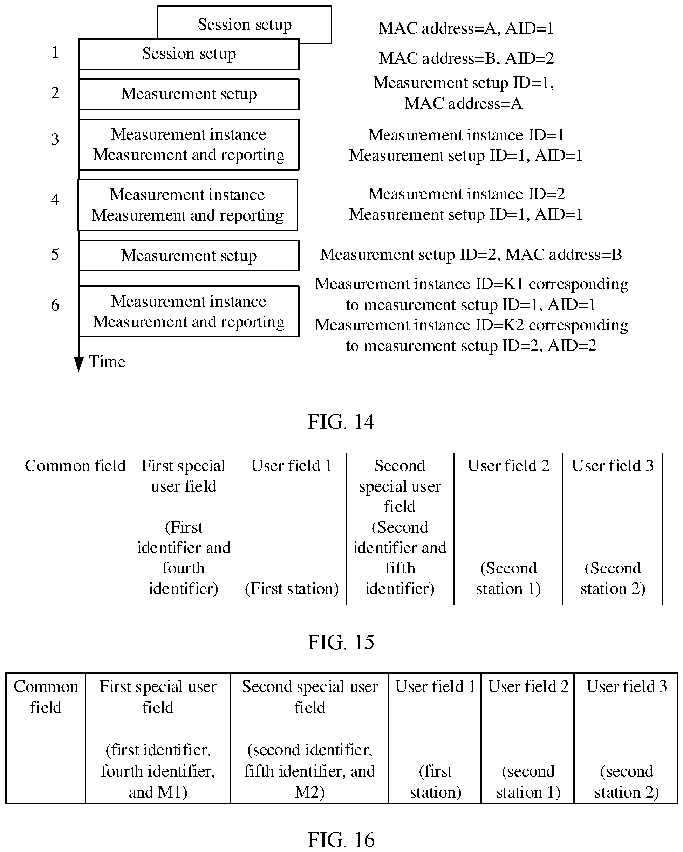

For example, an AID of the first station is 1, a MAC address of the first station is A, an AID of the second station is 2, a MAC address of the second station is 2, the identifier of the first measurement setup is 1, and the identifier of the second measurement setup is 2. As shown in FIG. 14, measurement may be performed on the first station and the second station in step 6, an identifier, corresponding to the first measurement setup, of the first measurement instance is K1, and an identifier, corresponding to the second measurement setup, of the first measurement instance is K2. For descriptions of step 1 to step 5 shown in FIG. 14, refer to the descriptions of step 1 to step 5 shown in FIG. 13. Details are not described herein again.

Optionally, in the manner 2, when the first device sends the first indication information by using a frame:
In a possible implementation, the fourth identifier and the first identifier are carried in a first special user field in the frame, and the fifth identifier and the second identifier are carried in a second special user field in the frame. Optionally, after receiving the frame, the second device may read the fourth identifier and the first identifier from the first special user field, and/or read the fifth identifier and the second identifier from the second special user field.

For example, as shown in FIG. 15, a user field corresponding to the first station is located between the first special user field and the second special user field, and the second special user field is followed by a user field corresponding to the second station. For detailed descriptions, refer to related descriptions corresponding to FIG. 9. Details are not described herein again.

For example, as shown in FIG. 16, the first special user field is adjacent to the second special user field, the first special user field further carries a quantity of first stations, and the second special user field further carries a quantity of second stations. For detailed descriptions, refer to related descriptions corresponding to FIG. 10a. Details are not described herein again.

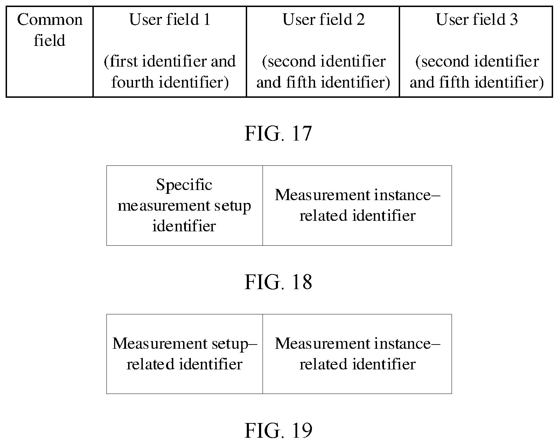

In another possible implementation, as shown in FIG. 17, the fourth identifier and the first identifier are carried in a user field that is in the frame and that corresponds to the first station, and the fifth identifier and the second identifier are carried in a user field that is in the frame and that corresponds to the second station. For detailed descriptions, refer to related descriptions corresponding to FIG. 11. Details are not described herein again.

Optionally, after receiving the frame, the second device may read the fourth identifier and the first identifier from the user field corresponding to the first station, and/or read the fifth identifier and the second identifier from the user field corresponding to the second station.

In some embodiments, the first indication information includes second indication information, and the second indication information indicates that the first measurement instance is a shared measurement instance.

Optionally, when the first device sends the first indication information by using a frame, the second indication information in the first indication information may be carried in a common field in the frame.

In a possible implementation, the second indication information includes a specific measurement setup identifier and/or a specific measurement instance identifier. The specific measurement setup identifier is not used to identify a measurement setup. After recognizing the specific measurement setup identifier, the second device may learn that the first measurement instance is a shared measurement instance. For example, if a length of a measurement setup identifier is 8 bits, the specific measurement setup identifier may be 11111111. Similarly, the specific measurement instance identifier is not used to identify a measurement instance, but indicates that the first measurement instance is a shared measurement instance.

Optionally, in this possible implementation, when the first indication information includes the third identifier, the second indication information may include the specific measurement setup identifier; or when the first indication information includes the fourth identifier and the fifth identifier, the second indication information may include the specific measurement setup identifier and/or the specific measurement instance identifier.

Optionally, in this possible implementation, if the second indication information includes the specific measurement setup identifier, the first indication information further includes a measurement instance-related identifier (for example, the third identifier), and the measurement instance-related identifier is also carried in the common field in the frame. A partial format of the common field in the frame may be shown in FIG. 18.

In another possible implementation, the second indication information may include a specific value with a length of X bits, where X is a positive integer. To be specific, when a value of the X bits is the specific value, the first measurement instance is a shared measurement instance. For example, X is 1.

Optionally, when a value of the X bits is a value other than the specific value, a measurement instance may be a non-shared measurement instance. For a non-shared measurement instance, during interaction between the first device and the second device, a measurement setup-related identifier and a measurement instance-related identifier may be carried in a partial frame structure shown in FIG. 19.

It should be noted that the measurement setup-related identifier may be a part or all of bits of an identifier of a measurement setup, and the measurement instance-related identifier may be a part or all of bits of an identifier of a measurement instance. An order of two fields shown in FIG. 18 and FIG. 19 may be reversed. The two fields may be discontinuous. To be specific, there may be further another field between the two fields. Alternatively, the two fields are combined into one field. This is not specifically limited in this application.

The foregoing embodiments provide designs of related frame structures of a measurement setup-related identifier and a measurement instance-related identifier in a case in which a plurality of measurement setups share one measurement instance. Certainly, there may alternatively be another design. For example, both a measurement setup-related identifier and a measurement instance-related identifier may be carried in a common field or a user field.

In addition to the foregoing frame structure designs, this application further provides a manner. In a scenario in which a plurality of measurement setups share one measurement instance, a plurality of stations are enabled, through a physical layer implementation, to learn of measurement setups respectively corresponding to the stations and a measurement instance shared by the measurement setups.

Optionally, different resources may be allocated to different stations in a resource allocation mode, for example, multi-user multiple-input multiple-output (multi-user multiple-input multiple-output, MU-MIMO) or orthogonal frequency division multiple access (orthogonal frequency division multiple access, OFDMA). An identifier related to a measurement setup that corresponds to a station corresponding to a resource is sent on the resource. Further, an identifier related to a shared measurement instance may be sent. Correspondingly, a station may perform reception on a resource corresponding to the station, to learn of a measurement setup and a measurement instance that correspond to the station.

Information sent on each resource is in one physical layer protocol data unit (physical protocol data unit, PPDU). The resource is a physical layer resource, for example, may be a resource unit (resource unit, RU) or a spatial flow.

For example, the first measurement setup and the second measurement setup share the first measurement instance, the first measurement setup corresponds to the first station, the second measurement setup corresponds to the second station, and the resource is an RU. The first station and the second station may be configured by using one PPDU. For example, an RU 1 is allocated to the first station, an RU 2 is allocated to the second station, the first identifier is sent on the RU 1 by using an EHT PPDU, and the second identifier is sent on the RU 2 by using the EHT PPDU. Further, the third identifier may be sent on the RU 1 and the RU 2; or the fourth identifier is sent on the RU 1, and the fifth identifier is sent on the RU 2.

Optionally, information sent on the RU may be carried in an NDPA frame. In this scenario, after the PPDU is sent, an NDP that can be measured by both the first station and the second station may be sent (to be specific, the NDP is shared by the first measurement setup and the second measurement setup). Certainly, information sent on the RU may alternatively be carried in another frame, for example, a trigger frame or a polling frame. This is not specifically limited in this application.

It can be understood that, in this solution, aggregation is not performed by using an intra-frame aggregation design, but is performed by sending different content by using different resources (for example, different RUs or different spatial flows) at a physical layer.

In some embodiments, a sensing responder may indicate, to a sensing initiator or a proxy device by using a capability indication, whether the sensing initiator or the proxy device is capable of joining a shared measurement instance, so that the sensing initiator or the proxy device performs related processing based on the capability indication. For example, when the sensing initiator or the proxy device is capable of joining a shared measurement instance, a station is bound to one of measurement setups for a plurality of shared measurement instances.

In some embodiments, selection of an identifier of a measurement instance may be discussed in the following three cases.

Case 1: selection of an identifier of a shared measurement instance when the shared measurement instance exists. For example, a shared measurement instance may be selected in the following plurality of manners.

Manner 1: An identifier of a shared measurement instance is not independent of an identifier of a non-shared measurement instance, and the identifier of the shared measurement instance is different from a used measurement instance identifier. The used measurement instance identifier may include an identifier of a non-shared measurement instance and an existing identifier of the shared measurement instance.

For example, the first measurement instance is used as an example. The manner 1 may be specifically as follows: The identifier of the first measurement instance is related to an identifier of a non-shared measurement instance corresponding to the first measurement setup and an identifier of a non-shared measurement instance corresponding to the second measurement setup.

Optionally, for a plurality of measurement setups that share a measurement instance, when an identifier of the shared measurement instance remains the same, a largest measurement instance identifier (which may be an identifier of a non-shared measurement instance or an existing identifier of the shared measurement instance) already used by the plurality of measurement setups that share the current measurement instance may be selected, and then the largest measurement instance identifier is increased by 1 to obtain an identifier of the current shared measurement instance.

For example, the first measurement instance is used as an example. Based on the example shown in FIG. 13, a largest measurement instance identifier already used by the first measurement setup and the second measurement setup that share the first measurement instance is 2. In this case, the identifier of the first measurement instance may be 3. To be specific, K in FIG. 13 may be 3.

Optionally, for a plurality of measurement setups that share a measurement instance, when an identifier of the shared measurement instance varies, an identifier, corresponding to a measurement setup, of the shared measurement instance may be equal to a largest measurement instance identifier already used by the measurement setup plus 1.

For example, the first measurement instance is used as an example. Based on the example shown in FIG. 14, a largest measurement instance identifier already used by the first measurement setup that shares the first measurement instance is 2, and in this case, the identifier, corresponding to the first measurement setup, of the first measurement instance may be 3, to be specific, K1 in FIG. 14 may be 3; and the second measurement setup that shares the first measurement instance has no unused measurement instance identifier, and in this case, the identifier, corresponding to the second measurement setup, of the first measurement instance may be 1, to be specific, K2 in FIG. 14 may be 1.

Manner 2: An identifier of a shared measurement instance is independent of an identifier of a non-shared measurement instance, and the identifier of the shared measurement instance is unrelated to a used identifier of a non-shared measurement instance.

Optionally, the manner 2 may be further divided into the following two manners.

### (1) An identifier of a shared measurement instance is related to an identifier of a measurement setup corresponding to the identifier of the shared measurement instance.

For example, the first measurement instance is used as an example. The manner (1) may be specifically as follows: The identifier of the first measurement instance is related to the identifier of the first measurement setup and the identifier of the second measurement setup.

Optionally, identification systems may be designed for a plurality of shared measurement instances. Each identification system corresponds to a group of measurement setup identifiers. An identifier of a current shared measurement instance is an unused identifier in an identification system that corresponds to a measurement setup corresponding to the current shared measurement instance.

For example, two identification systems are designed, an identification system 1 corresponds to a measurement setup 1 and a measurement setup 2, and an identification system 2 corresponds to a measurement setup 3 and a measurement setup 4. It is assumed that a first shared measurement instance corresponds to the measurement setup 1 and the measurement setup 2 and has an identifier of 1, a second shared measurement instance corresponds to the measurement setup 1 and the measurement setup 2 and has an identifier of 2, and a third shared measurement instance corresponds to the measurement setup 3 and the measurement setup 4 and has an identifier of 1.

In this scenario, if a current shared measurement instance corresponds to the measurement setup 1 and the measurement setup 2, an identifier of the current shared measurement instance may be 3; or if a current shared measurement instance corresponds to the measurement setup 3 and the measurement setup 4, an identifier of the current shared measurement instance may be 2.

### (2) An identifier of a shared measurement instance is unrelated to an identifier of a measurement setup corresponding to the identifier of the shared measurement instance.

For example, the first measurement instance is used as an example. The manner (2) may be specifically as follows: The identifier of the first measurement instance is a candidate identifier, and the candidate identifier is applicable to a shared measurement instance corresponding to any measurement setup.

Optionally, an identification system may be designed for a shared measurement instance. The identification system is applicable to a shared measurement instance corresponding to any measurement setup, in other words, corresponds to shared measurement instances corresponding to all measurement setup identifiers. An identifier of a current shared measurement instance is an unused identifier in the identification system.

For example, the first measurement instance is used as an example. Based on the example shown in FIG. 13, no other shared measurement instance exists before the first measurement instance appears. Therefore, the identifier of the first measurement instance may be 1. Based on the example shown in FIG. 14, the identifier, corresponding to the first measurement setup, of the first measurement instance may be 1, and the identifier, corresponding to the second measurement setup, of the first measurement instance may be 2.

For example, it is assumed that a first shared measurement instance corresponds to a measurement setup 1 and a measurement setup 2 and has an identifier of 1, and a second shared measurement instance corresponds to the measurement setup 1 and the measurement setup 2 and has an identifier of 2. In this scenario, if a current shared measurement instance corresponds to the measurement setup 1 and the measurement setup 2, an identifier of the current shared measurement instance may be 3.

Case 2: selection of an identifier of a non-shared measurement instance when a shared measurement instance exists. For example, a non-shared measurement instance may be selected in the following plurality of manners.

Manner 1: An identifier of a non-shared measurement instance is not independent of an identifier of a shared measurement instance, and the identifier of the non-shared measurement instance is different from a used measurement instance identifier. Refer to related descriptions in the manner 1 in the case 1 in the foregoing manner. Details are not described herein again.

Manner 2: An identifier of a non-shared measurement instance is independent of an identifier of a shared measurement instance.

Optionally, in the manner 2, an identifier of a current non-shared measurement instance is an identifier not used by a measurement setup corresponding to the non-shared measurement instance. Further, the identifier of the current non-shared measurement instance may be an unused smallest identifier.

For example, a measurement setup already corresponds to two non-shared measurement instances with identifiers of 1 and 2 respectively. In this case, an identifier of a current non-shared measurement instance corresponding to the measurement setup may be 3.

Case 3: selection of an identifier of a non-shared measurement instance when no shared measurement instance exists.

Optionally, in this case, a manner of selecting an identifier of a non-shared measurement instance is the same as the manner 2 in the case 2. Refer to the foregoing related descriptions. Details are not described herein again.

According to this solution, selection of an identifier of a shared measurement instance and an identifier of a non-shared measurement instance is specified, so that both communication entities have a synchronous understanding of a measurement instance, to improve measurement efficiency.

In some embodiments, a reporting phase in a measurement instance includes an instantaneous feedback manner and a delayed feedback manner. In the instantaneous feedback mode, measurement information of a current measurement instance is reported in the current measurement instance. In the delayed feedback, measurement information of the y^{th} measurement instance before a current measurement instance is reported in the current measurement instance. In this case, measurement instances do not overlap each other, and measurement instance identifiers have no significant meaning and may be deleted.

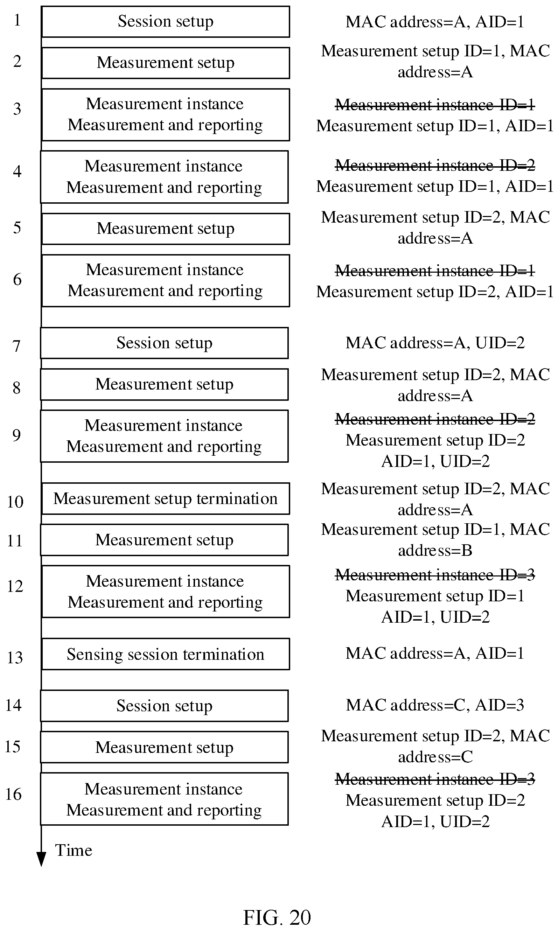

For example, when measurement instance identifiers are deleted, the procedure shown in FIG. 1b may be modified to a procedure shown in FIG. 20. A difference lies in that the procedure shown in FIG. 20 does not include measurement instance identifiers. For other information, refer to related descriptions corresponding to FIG. 1b. Details are not described herein again.

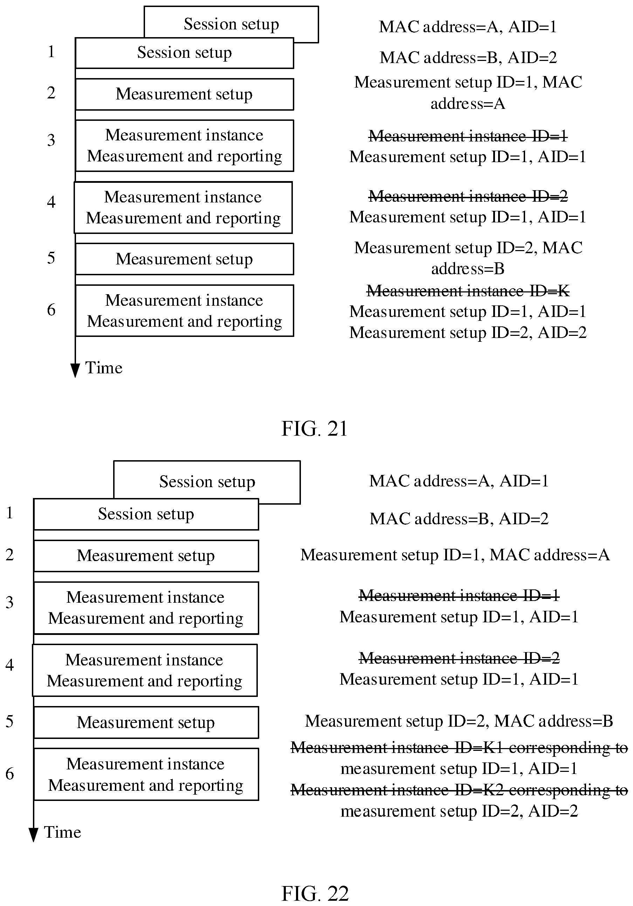

Optionally, in the solution shown in FIG. 5 in this application, the first indication information may not include the identifier of the first measurement instance. For example, when the identifier of the first measurement instance is not included, the procedure shown in FIG. 13 may be modified to a procedure shown in FIG. 21, and the procedure shown in FIG. 14 may be modified to a procedure shown in FIG. 22. A difference lies in that the procedures shown in FIG. 21 and FIG. 22 do not include measurement instance identifiers. For other information, refer to related descriptions corresponding to FIG. 13 and FIG. 14. Details are not described herein again.

Optionally, when measurement instance identifiers are deleted, whether a current measurement instance ends may be identified in the following two implementations.

Manner 1: The first measurement instance ends when a termination mark corresponding to the first measurement instance appears.

Optionally, the termination mark may be 1-bit information. The termination mark may be carried in the last frame of the first measurement instance. A frame of a measurement instance step that appears after the termination mark is a frame of a next measurement instance.

Manner 2: The first measurement instance ends when a target frame corresponding to the first measurement instance appears.

Optionally, the target frame may be a polling frame that appears after a feedback frame of the first measurement instance. The appearance of the polling frame indicates that the first measurement instance ends. In addition, the polling frame is a polling frame of a next measurement instance.

It should be noted that the foregoing manners of sending the first identifier and the second identifier are still applicable when measurement instance identifiers are deleted.

According to this solution, the first indication information does not include a measurement instance-related identifier, so that signaling can be saved. In addition, termination of a measurement instance is identified based on a target frame or a termination mark. In this way, measurement instances can be distinguished when no measurement instance-related identifier exists, to avoid confusion between different measurement instances.

In some embodiments, this application further provides the following three manners of continuously sending NDPs.

Manner 1: One measurement instance may include a plurality of TF soundings and/or a plurality of NDPA soundings.

NDPs are sent in both TF soundings and NDPA soundings. Therefore, a plurality of NDPs may be sent in the case of a plurality of TF soundings and/or NDPA soundings.

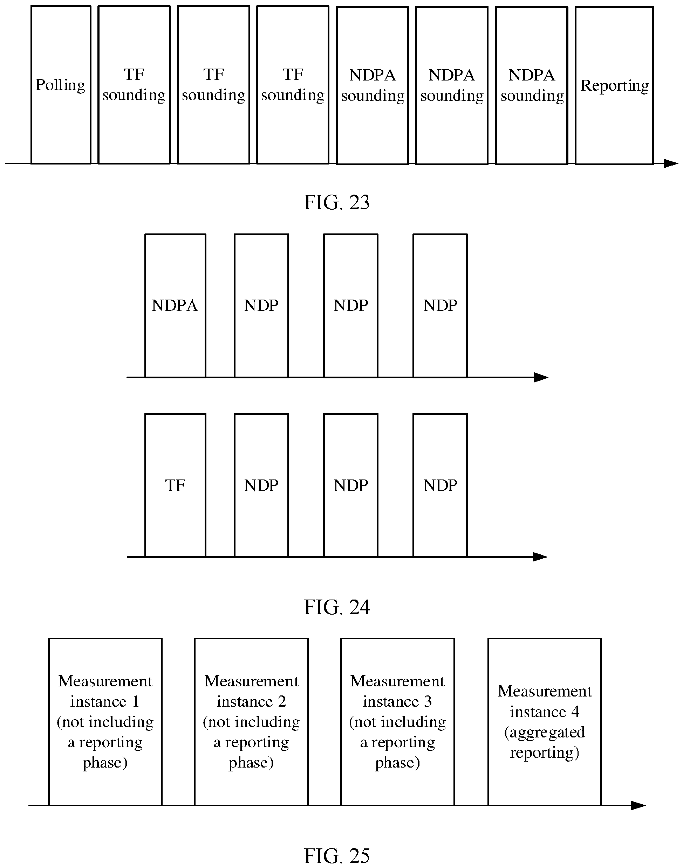

For example, as shown in FIG. 23, one measurement instance may include three TF soundings and three NDPA soundings. Currently, a quantity of TF soundings and a quantity of NDPA soundings may alternatively be another value. This is not limited.

Manner 2: A plurality of NDPs are sent after an NDPA frame or a TF in a measurement instance.

For example, as shown in FIG. 24, three NDPs may be sent after an NDPA frame or a TF. Currently, another quantity of NDPs may alternatively be sent. This is not limited.

Optionally, in the manner 1 and the manner 2, M pieces of measurement information may be reported in a reporting phase in a measurement instance, where M may be a quantity of NDPs. The frame structures provided in the foregoing embodiments of this application may be appropriately modified to send the M pieces of measurement information, or the M pieces of measurement information may be sent in the foregoing MU-MIMO or OFDMA mode.

Optionally, the quantity M of the plurality of NDPs may be indicated in a frame or a PPDU before a reporting frame. For example, in the manner 1, the quantity M of NDPs may be indicated in a measurement setup phase; and in the manner 1, the quantity M of NDPs may be indicated in the NDPA frame or the TF frame.

Manner 3: When at least one measurement instance (denoted as a first-type measurement instance) does not include a reporting phase, aggregated reporting is performed in a measurement instance (denoted as a second-type measurement instance) after the at least one measurement instance.

To be specific, measurement information of one or more first-type measurement instances is reported in the second-type measurement instance. Optionally, in an instantaneous feedback scenario, measurement information of a second-type measurement instance may be reported in the second-type measurement instance; and in a delayed feedback scenario, measurement information of a second-type measurement instance may be reported in a subsequent measurement instance.

For example, as shown in FIG. 25, a measurement instance 1, a measurement instance 2, and a measurement instance 3 do not include a reporting phase. In an instantaneous feedback scenario, measurement information of the measurement instance 1 to a measurement instance 4 is reported in the measurement instance 4; and in a delayed feedback scenario, measurement information of the measurement instance 1 to the measurement instance 3 is reported in the measurement instance 4, and measurement information of the measurement instance 4 is reported in a subsequent measurement instance. Optionally, the one or more first-type measurement instances may be measurement instances corresponding to different measurement setups, to be specific, a plurality of feedbacks for measurement instances corresponding to a plurality of different measurement setups may be aggregated in aggregated reporting; or the one or more first-type measurement instances are measurement instances in one measurement setup, to be specific, feedbacks for a plurality of measurement instances in a measurement setup may be aggregated in aggregated reporting.

Optionally, during aggregated reporting, the foregoing frame structures provided in this application may be appropriately modified to send a plurality of pieces of measurement information. To be specific, measurement information of a plurality of measurement instances may be carried in a frame. Alternatively, a plurality of pieces of measurement information may be sent in the foregoing MU-MIMO or OFDMA mode. To be specific, measurement information of different measurement instances is carried in different resources at a physical layer.

Optionally, when measurement information of different measurement instances is carried in different resources at the physical layer, resources corresponding to the measurement instances may be allocated by using a trigger frame or in another manner before a reporting frame is sent in a reporting phase. During subsequent reporting, measurement information of a corresponding measurement instance is sent based on an allocated resource.

According to this solution, NDPs are continuously sent, to reduce a sensing delay and save signaling when a plurality of repeated measurements need to be performed and sensing needs to be performed based on information of the plurality of repeated measurements.

The foregoing describes the sensing method in embodiments of this application. The following describes a communication apparatus in embodiments of this application. The communication apparatus in embodiments of this application includes a communication apparatus for a transmit end and a communication apparatus for a receive end. It should be understood that the communication apparatus for the transmit end is the first device in the foregoing method and has any function of the first device in the foregoing method, and the communication apparatus for the receive end is the second device in the foregoing method and has any function of the second device in the foregoing method.

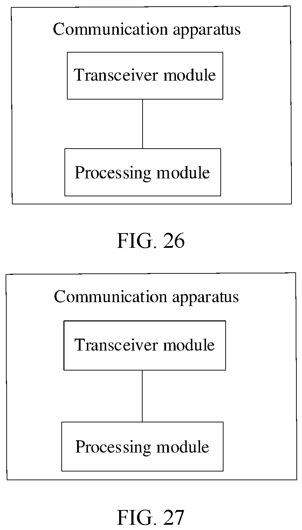

As shown in FIG. 26, the communication apparatus for the transmit end includes a processing module and a transceiver module.

The processing module is configured to generate first indication information. The transceiver module is configured to send the first indication information. The first indication information indicates that a first measurement setup and a second measurement setup share a first measurement instance.

It should be understood that the communication apparatus for the transmit end in this embodiment of this application is the first device in the foregoing method and has any function of the first device in the foregoing method. For specific details, refer to the foregoing method. Details are not described herein again.

As shown in FIG. 27, the communication apparatus for the receive end includes a processing module and a transceiver module.

The transceiver module is configured to receive first indication information. The processing module is configured to parse the first indication information. The first indication information indicates that a first measurement setup and a second measurement setup share a first measurement instance.

It should be understood that the communication apparatus for the transmit end in this embodiment of this application is the second device in the foregoing method and has any function of the second device in the foregoing method. For specific details, refer to the foregoing method. Details are not described herein again.

The foregoing describes the communication apparatus for the transmit end and the communication apparatus for the receive end in embodiments of this application. The following describes possible product forms of the communication apparatus for the transmit end and the communication apparatus for the receive end.

It should be understood that any form of product with the features of the communication apparatus for the transmit end in FIG. 26 and any form of product with the features of the communication apparatus for the receive end in FIG. 27 fall within the protection scope of this application. It should be further understood that the following descriptions are merely examples, and a product form of the communication apparatus for the transmit end and a product form of the communication apparatus for the receive end in embodiments of this application are not limited thereto.

In a possible product form, the communication apparatus for the transmit end and the communication apparatus for the receive end in embodiments of this application may be implemented by using general bus system structures.

The communication apparatus for the transmit end includes a processor and a transceiver that is internally connected to and communicates with the processor. The processor is configured to generate first indication information. The transceiver is configured to send the first indication information. The first indication information indicates that a first measurement setup and a second measurement setup share a first measurement instance.

Optionally, the communication apparatus for the transmit end may further include a memory. The memory is configured to store instructions to be executed by the processor.

The communication apparatus for the receive end includes a processor and a transceiver that is internally connected to and communicates with the processor. The transceiver is configured to receive first indication information. The processor is configured to parse the first indication information. The first indication information indicates that a first measurement setup and a second measurement setup share a first measurement instance.

Optionally, the communication apparatus for the receive end may further include a memory. The memory is configured to store instructions to be executed by the processor.

In a possible product form, the communication apparatus for the transmit end and the communication apparatus for the receive end in embodiments of this application may be implemented by using general-purpose processors.

A general-purpose processor for implementing the communication apparatus for the transmit end includes a processing circuit and an output interface that is internally connected to and communicates with the processing circuit. The processing circuit is configured to generate first indication information. The output interface is configured to send the first indication information. The first indication information indicates that a first measurement setup and a second measurement setup share a first measurement instance.

Optionally, the general-purpose processor may further include a storage medium, and the storage medium is configured to store instructions to be executed by the processing circuit.

A general-purpose processor for implementing the communication apparatus for the receive end includes a processing circuit and an input interface that is internally connected to and communicates with the processing circuit. The input interface is configured to receive first indication information. The processing circuit is configured to parse the first indication information. The first indication information indicates that a first measurement setup and a second measurement setup share a first measurement instance.

Optionally, the general-purpose processor may further include a storage medium, and the storage medium is configured to store instructions to be executed by the processing circuit.

In a possible product form, the communication apparatus for the transmit end and the communication apparatus for the receive end in embodiments of this application may alternatively be implemented by using the following components: one or more field programmable gate arrays (field programmable gate array, FPGA), a programmable logic device (programmable logic device, PLD), a controller, a state machine, a gate logic, a discrete hardware component, any other suitable circuit, or any combination of circuits capable of performing various functions described in this application.

It should be understood that the communication apparatus for the transmit end and the communication apparatus for the receive end in the foregoing product forms respectively have any functions of the first device and the second device in the foregoing method embodiments. Details are not described herein again.

A person of ordinary skill in the art may be aware that, in combination with the examples described in embodiments disclosed in this specification, method steps and units may be implemented by electronic hardware, computer software, or a combination thereof. To clearly describe interchangeability between the hardware and the software, the foregoing generally describes steps and compositions of each embodiment based on functions. Whether the functions are performed by hardware or software depends on particular applications and design constraints of technical solutions. A person of ordinary skill in the art may use different methods to implement the described functions for each particular application, but it should not be considered that the implementation goes beyond the scope of this application.

It can be clearly understood by a person skilled in the art that, for ease and brevity of description, for detailed working processes of the foregoing system, apparatus, and unit, reference may be made to corresponding processes in the foregoing method embodiments. Details are not described herein again.

In embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in electrical, mechanical, or other forms.

The units described as separate parts may or may not be physically separate, and parts shown as units may or may not be physical units, that is, may be located in one place, or may be distributed on a plurality of network units. A part or all of the units may be selected according to actual requirements to achieve objectives of solutions in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A sensing method, wherein the method comprises:
generating first indication information, wherein the first indication information indicates that a first measurement setup and a second measurement setup share a first measurement instance; and
sending the first indication information.

2. The method according to claim 1, wherein the first measurement setup is used to configure a first parameter for a first station, and the second measurement setup is used to configure a second parameter for a second station.

3. The method according to claim 2, wherein the first indication information comprises a first identifier and a second identifier, the first identifier is a part or all of bits of an identifier of the first measurement setup, and the second identifier is a part or all of bits of an identifier of the second measurement setup.

4. The method according to claim 3, wherein the first indication information further comprises a third identifier, and the third identifier is a part or all of bits of an identifier of the first measurement instance.

5. The method according to claim 3, wherein the first indication information does not comprise an identifier of the first measurement instance.

6. The method according to any one of claims 3 to 5, wherein the sending the first indication information comprises:
sending the first indication information by using a frame, wherein the first identifier is carried in a first special user field in the frame, and the second identifier is carried in a second special user field in the frame.

7. The method according to claim 6, wherein a user field corresponding to the first station is located between the first special user field and the second special user field, and the second special user field is followed by a user field corresponding to the second station.

8. The method according to claim 6, wherein the first special user field is adjacent to the second special user field, the first special user field further carries a quantity of first stations, and the second special user field further carries a quantity of second stations.

9. The method according to any one of claims 3 to 5, wherein the sending the first indication information comprises:
sending the first indication information by using a frame, wherein the first identifier is carried in a user field that is in the frame and that corresponds to the first station, and the second identifier is carried in a user field that is in the frame and that corresponds to the second station; or
the first identifier and the second identifier are carried in a common field in the frame.

10. The method according to claim 3, wherein the first indication information further comprises a fourth identifier and a fifth identifier, the fourth identifier is a part or all of bits of an identifier, corresponding to the first measurement setup, of the first measurement instance, and the fifth identifier is a part or all of bits of an identifier, corresponding to the second measurement setup, of the first measurement instance.

11. The method according to claim 10, wherein the sending the first indication information comprises:
sending the first indication information by using a frame, wherein the fourth identifier and the first identifier are carried in a first special user field in the frame, and the fifth identifier and the second identifier are carried in a second special user field in the frame; or
the fourth identifier and the first identifier are carried in a user field that is in the frame and that corresponds to the first station, and the fifth identifier and the second identifier are carried in a user field that is in the frame and that corresponds to the second station.

12. The method according to claim 11, wherein a user field corresponding to the first station is located between the first special user field and the second special user field, and the second special user field is followed by a user field corresponding to the second station; or
the first special user field is adjacent to the second special user field, the first special user field further carries a quantity of first stations, and the second special user field further carries a quantity of second stations.

13. The method according to any one of claims 3 to 12, wherein second indication information in the first indication information indicates that the first measurement instance is a shared measurement instance.

14. The method according to claim 13, wherein the second indication information comprises a specific measurement setup identifier and/or a specific measurement instance identifier; or
the second indication information comprises a specific value with a length of X bits, wherein X is a positive integer.

15. The method according to any one of claims 6 to 9, claim 11, or claim 12, wherein the frame is a null data physical layer protocol data unit announcement NDPA frame, a trigger frame, a feedback frame, a reporting frame, a request frame, or a polling frame.

16. The method according to any one of claims 1 to 15, wherein the identifier of the first measurement instance is related to an identifier of a non-shared measurement instance corresponding to the first measurement setup and an identifier of a non-shared measurement instance corresponding to the second measurement setup; or
the identifier of the first measurement instance is related to the identifier of the first measurement setup and the identifier of the second measurement setup; or
the identifier of the first measurement instance is a candidate identifier, and the candidate identifier is applicable to a shared measurement instance corresponding to any measurement setup.

17. The method according to claim 5, wherein the first measurement instance ends when a target frame corresponding to the first measurement instance appears; or
the first measurement instance ends when a termination mark corresponding to the first measurement instance appears.

18. A sensing method, wherein the method comprises:
receiving first indication information; and
parsing the first indication information, wherein the first indication information indicates that a first measurement setup and a second measurement setup share a first measurement instance.

19. The method according to claim 18, wherein the first measurement setup is used to configure a first parameter for a first station, and the second measurement setup is used to configure a second parameter for a second station.

20. The method according to claim 19, wherein the first indication information comprises a first identifier and a second identifier, the first identifier is a part or all of bits of an identifier of the first measurement setup, and the second identifier is a part or all of bits of an identifier of the second measurement setup; and
the method further comprises:
determining the first measurement setup based on the first identifier, and/or determining the second measurement setup based on the second identifier.

21. The method according to claim 20, wherein the first indication information further comprises a third identifier, and the third identifier is a part or all of bits of an identifier of the first measurement instance; and
the method further comprises:
determining the first measurement instance based on the third identifier.

22. The method according to claim 20, wherein the first indication information does not comprise an identifier of the first measurement instance.

23. The method according to any one of claims 20 to 22, wherein the receiving the first indication information comprises:
receiving the first indication information by using a frame, wherein the first identifier is carried in a first special user field in the frame, and the second identifier is carried in a second special user field in the frame; and
the parsing the first indication information comprises:
reading the first identifier from the first special user field, and/or reading the second identifier from the second special user field.

24. The method according to claim 23, wherein a user field corresponding to the first station is located between the first special user field and the second special user field, and the second special user field is followed by a user field corresponding to the second station.

25. The method according to claim 23, wherein the first special user field is adjacent to the second special user field, the first special user field further carries a quantity of first stations, and the second special user field further carries a quantity of second stations.

26. The method according to any one of claims 20 to 22, wherein the receiving the first indication information comprises: receiving the first indication information by using a frame; and
the first identifier is carried in a user field that is in the frame and that corresponds to the first station, the second identifier is carried in a user field that is in the frame and that corresponds to the second station, and the parsing the first indication information comprises:
reading the first identifier from the user field corresponding to the first station, and/or reading the second identifier from the user field corresponding to the second station; or
the first identifier and the second identifier are carried in a common field in the frame, and the parsing the first indication information comprises:
reading the first identifier and/or the second identifier from the common field.

27. The method according to claim 20, wherein the first indication information further comprises a fourth identifier and a fifth identifier, the fourth identifier is a part or all of bits of an identifier, corresponding to the first measurement setup, of the first measurement instance, and the fifth identifier is a part or all of bits of an identifier, corresponding to the second measurement setup, of the first measurement instance; and
the method further comprises:
determining the first measurement instance based on the fourth identifier or the fifth identifier.

28. The method according to claim 27, wherein the receiving the first indication information comprises: receiving the first indication information by using a frame; and
the fourth identifier and the first identifier are carried in a user field that is in the frame and that corresponds to the first station, the fifth identifier and the second identifier are carried in a user field that is in the frame and that corresponds to the second station, and the parsing the first indication information comprises:
reading the fourth identifier and the first identifier from the user field corresponding to the first station, and/or reading the fifth identifier and the second identifier from the user field corresponding to the second station; or
the fourth identifier and the first identifier are carried in a first special user field in the frame, the fifth identifier and the second identifier are carried in a second special user field in the frame, and the parsing the first indication information comprises:
reading the fourth identifier and the first identifier from the first special user field, and/or reading the fifth identifier and the second identifier from the second special user field.

29. The method according to claim 28, wherein a user field corresponding to the first station is located between the first special user field and the second special user field, and the second special user field is followed by a user field corresponding to the second station; or
the first special user field is adjacent to the second special user field, the first special user field further carries a quantity of first stations, and the second special user field further carries a quantity of second stations.

30. The method according to any one of claims 20 to 29, wherein second indication information in the first indication information indicates that the first measurement instance is a shared measurement instance.

31. The method according to claim 30, wherein the second indication information comprises a specific measurement setup identifier and/or a specific measurement instance identifier; or
the second indication information comprises a specific value with a length of X bits, wherein X is a positive integer.

32. The method according to any one of claims 23 to 26, claim 28, or claim 29, wherein the frame is a null data physical layer protocol data unit announcement NDPA frame, a trigger frame, a feedback frame, a reporting frame, a request frame, or a polling frame.

33. The method according to any one of claims 18 to 32, wherein the identifier of the first measurement instance is related to an identifier of a non-shared measurement instance corresponding to the first measurement setup and an identifier of a non-shared measurement instance corresponding to the second measurement setup; or
the identifier of the first measurement instance is related to the identifier of the first measurement setup and the identifier of the second measurement setup; or
the identifier of the first measurement instance is a candidate identifier, and the candidate identifier is applicable to a shared measurement instance corresponding to any measurement setup.

34. The method according to claim 22, wherein the first measurement instance ends when a target frame corresponding to the first measurement instance appears; or
the first measurement instance ends when a termination mark corresponding to the first measurement instance appears.

35. A computer-readable storage medium, configured to store a computer program, wherein the computer program comprises instructions for performing the method according to any one of claims 1 to 17.

36. A computer-readable storage medium, configured to store a computer program, wherein the computer program comprises instructions for performing the method according to any one of claims 18 to 34.

37. A computer program product, wherein the computer program product comprises instructions for performing the method according to any one of claims 1 to 17.

38. A computer program product, wherein the computer program product comprises instructions for performing the method according to any one of claims 18 to 34.

39. A communication apparatus, wherein the communication apparatus comprises a processor, and the processor is configured to run a computer program or instructions, so that the communication apparatus performs the method according to any one of claims 1 to 17.

40. A communication apparatus, wherein the communication apparatus comprises a processor, and the processor is configured to run a computer program or instructions, so that the communication apparatus performs the method according to any one of claims 18 to 34.
